# EUROPEAN PATENT SPECIFICATION

(11) **EP 0 365 960 B1**
(45) Date of publication and mention of the grant of the patent: **08.04.1998**
(21) Application number: 89119147.0
(22) Date of filing: 14.10.1989
(51) Int. Cl.: G06T 1/60

(54) **Apparatus and method for a computer animation production system**
Anordnung und Verfahren zur rechnergestützten Herstellung beweglicher Bilder
Appareil et procède de production d'images animées par ordinateur

(30) Priority: 24.10.1988 US 263429
(43) Date of publication of application: 02.05.1990
(73) Proprietor: THE WALT DISNEY COMPANY, Glendale, CA 91201 (US)
(72) Inventor: Davis, Lemuel L., La Canada, CA 91011 (US); Kimball, Mark, La Canada, CA 91011 (US); Sarkissian, Vahe, Pasadena, CA 91106 (US); Kohler, Dylan W., Glendale, CA 91201 (US)
(74) Representative: UEXKÜLL & STOLBERG

(56) References cited:
- EP-A- 0 188 828
- WO-A-87/05767
- US-A- 4 600 919
- PROCEEDINGS OF THE 12TH CONFERENCE ON LOCAL NETWORKS 5 OCTOBER 1987, MINNEAPOLIS, US pages 66 - 71; A. YU ET AL.: 'Enhancing a local area network for internetworking'

## Description

### FIELD OF THE INVENTION

The present invention relates to a computer animation production system for processing digital image data to at least one information processing device (workstation) for enabling users to develop, utilize and enhance feature-film animation. More particularly, the computer animation production system includes a first global area network and a second global area network; the first global area network communicates digital control information to the at least one information processing device and the second network separately communicates digital image data to the at least one information processing device.

### BACKGROUND OF THE INVENTION

The production of feature-film animation is a lengthy and complicated task, sometimes requiring the resources of an entire studio for a period ranging from one to three years after a script has been completed. Animation for feature-films is generally of the highest quality involving several cel layers, extensive background work, and careful attention to production details such as cel cleanliness, image detail and accuracy.

Due to the intensive and costly labor requirements associated with animation, numerous steps have been taken to integrate computers into the process of generating feature-film animation. There are substantial advantages to be gained by utilizing digital techniques in the preparation of cartoon backgrounds and characters. For instance, painting with a computer graphics system is a rapid, easy process which allows a great leeway for editing and correction. Additionally, optical scanning can be used to automatically input completed characters and background paintings. For example, after a particular background has been stored in the system, color palettes can be altered, allowing the artist's painting to suffice for two different backgrounds; one as a night scene and the other as a day scene. Several computer graphic methods currently exist for converting animator's pencil sketches into full color images. The computed colored sketches (cels) can be easily combined with foreground and background layers to produce completed frames. In addition to offering considerable savings in labor, these methods provide editing and correction capabilities which were previously not implementable by conventional animation techniques, Mark Levoy, "COMPUTER-ASSISTED CARTOON ANIMATION" - Masters Thesis, Cornell Unversity (August, 1978).

In the past several years, many innovations have occurred, enabling systems to accommodate the intensive computational and storage requirements associated with computerized animation. For example, in an article entitled "YABBA DABBA DEC," Digital Review (September 15, 1986), a system is described for handling the image data requirements for television production purposes. The article describes a supercomputer-central-processing system consisting of a VAX cluster arrangement incorporating two VAX-11/785s, a VAX 8650, a HSC50 mass storage controller with twelve RA81 disk drives and two RA78 magnetic tape drives.

Although the system described may be acceptable for television image data requirements, it is inadequate for the enormous data requirements associated with feature-film animation. Due to the extremely high data requirements associated with recording on high resolution films (feature film animation is typically recorded on 35 mm film), the centralized processing strategy quickly becomes a bottleneck for storing, updating and transferring digital image data. Under such circumstances, the production efficiency for creating computerized feature-film animation is substantially degraded.

WO-A-87/05767 relates to a distributed system for enabling processing of information such as image information at different work stations. The system includes processing devices connected to a central portion for storing and management of the information. The central portion comprises a CPU and storage means and is connected to the work stations by means of two separate networks, a first network for communication control information from the central portion to the work stations and a second network for communicating image information.

The article "Enhancing a Local Area Network for Internet Working" by A.YU et al. published in the Proceedings of the 12th Conference on Local Computer Networks, 5 October 1987, Minneapolis, U.S.A., at pages 66-71 describes another distributed system including a number of processor units connected by means of a C-bus, including several parallel buses, wherein one is used for data information and another for control information. The system comprises interfaces and memories which are connected to the interfaces.

### SUMMARY OF THE INVENTION

The present invention relates to a computer image production system as claimed in claim 1 and to a method as claimed in claim 20.

Briefly, the preferred embodiment of the invention is a computerized information processing apparatus which contains a first global area network and a second global area network. The first global area network communicates digital control information to at least one information processing device (workstation). The digital control information includes database information. The second global area network is for communicating digital image data to the at least one information processing device. The digital image data includes pixel characteristic information for image reproduction on the at least one information processing device. The second global area network also includes at least one means for arbitrating access (parallel disk controller) of the digital image data for the at least one information processing device. Associated with each of the at least one means for arbitrating is a temporary memory means (disk cluster) for storing digital image data likely to be accessed by the at least one information processing device.

In the preferred embodiment, the second global area network also contains an archival memory means for storing digital image data and associated database information (Animation Logistics System) for longer periods of time. The archival memory means typically includes an optical disk configuration or high capacity tape drive(s).

The preferred embodiment also includes a preferred method for use with the computer animation production system for processing digital image data. The method includes three steps. First, requesting a segment of digital image data and associated database information for further processing at one of the information processing devices; second, determining the location of the segment of digital image data; and third, transferring the requested segment of digital image data over the second global area network to the requesting information processing device for further processing, only when the requested segment of digital image data is not presently controlled by the requesting information processing device.

The architecture and methodology of the present invention reduce the cost of producing animation in the classical animation style, by using information processing devices to assist in the animation process. The information processing devices essentially distribute the processing power from a central location, as discussed in YABBA DABBA DEC, to dispersed locations along the first and the second networks. In this way, the intensive data requirements of a centralized system are distributed among several information processing devices simultaneously.

The architectural design and methodology of the present invention maximize the throughput of digital image data and control information by utilizing two independent global area networks, while minimizing the potential downtime caused by any system malfunction by distributing the processing power to the information processing devices. A sophisticated data base management system (Animation Logistics System) also enhances efficiency by keeping track of all memory storage allocation and production scheduling; supervisors of the production process are kept informed at all times of the status of any task being performed at the dispersed information processing devices. Lastly, the architectural design is such that expansion is easily accommodated.

### BRIEF DESCRIPTION OF THE DRAWINGS

Fig. 1 is a schematic block diagram of a computer animation production system for storing, updating and transferring digital image data in accordance with the present invention;
Fig. 2 is an alternate embodiment of the computer animation production system for processing digital image data in accordance with the present invention;
Fig. 3 depicts a schematic block diagram of a workstation at which a user can review and update the digital image data and associated databases respectively, in accordance with the present invention;
Fig. 4 is flow diagram which depicts the sequence of operations of the computer animation production system of Figs. 1 and 2 under control of the USER INTERACTION routine for acquiring, using and returning both image files and scene database files;
Fig. 5 is a flow diagram which depicts the sequence of operations performed by various components of the computer animation production system of Figs. 1 and 2 for determining the identification of a requested scene under control of the WORK SELECTION routine referenced in Fig. 4;
Figs. 6a and 6b are flow diagrams which depict the sequence of operations of a workstation (Fig. 3) and the Animation Logistics System for locating and acquiring a copy of a worklist under control of the WORKLIST ACQUISITION routine referenced in Fig. 5;
Fig. 7 is a flow diagram which depicts the sequence of operations of a workstation (Fig. 3) and the Animation Logistics System for performing a relational database query to determine the identification for a particular scene under control of the WORK SELECTION DATABASE QUERY routine referenced in Fig. 5;
Figs. 8a and 8b are flow diagrams which depict the sequence of operations of a workstation (Fig. 3) and the Animation Logistics System for determining the accessibility of a requested scene under control of the ACCESS ARBITRATION routine referenced in Fig. 4;
Fig. 9 is a flow diagram which depicts the sequence of operations of a workstation (Fig. 3) and the Animation Logistics System for acquiring a copy of a scene database file under control of the SCENE DATABASE ACQUISITION routine referenced in Fig. 4;
Fig. 10 is a flow diagram which depicts the sequence of operations of the Animation Logistics System for determining the location of a requested digital image data file under control of the IMAGE DATA ACQUISITION routine referenced in Fig. 4;
Fig. 11 is a flow diagram which depicts the sequence of operations of the workstation for determining the location of a requested digital image data file at a local disk cluster under control of the ACQUIRE IMAGE FILE FROM LOCAL DISK CLUSTER routine referenced in Fig. 10;
Figs. 12a, 12b and 12c are flow diagrams which depict a sequence of operations of the Animation Logistics System for determining the location of a requested digital image data file at a remote disk cluster under control of the ACQUIRE IMAGE DATA FILE FROM REMOTE DISK CLUSTER routine referenced in Fig. 10;
Fig. 13 is a flow diagram which depicts the sequence of operations of the Animation Logistics System for searching each volume directory of a cluster in order to locate a requested digital image data file under control of the SEARCH EACH CLUSTER VOLUME DIRECTORY routine referenced in Fig. 12a;
Fig. 14 is a flow diagram which depicts the sequence of operations of a workstation (Fig. 3) and its associated memory for enhancing digital image data under control of the DATA ENHANCEMENT routine referenced in Fig. 4;
Figs. 15a, 15b and 15c are flow block diagrams which depict the sequence of operations of a workstation (Fig. 3) and the Animation Logistics System for releasing control of scene database files and image data files under control of the ACCESS RELEASE routine referenced in Fig. 4;
Fig. 16 is a flow diagram which depicts the sequence of operations of the Animation Logistics System for storing or deleting returned scene database files and image data files under control of the RETURN SCENE DATABASE FILE routine referenced in Fig. 15b;
Fig. 17 is a flow diagram which depicts the sequence of operations of the Animation Logistics System for retrieving and updating scene database files and image data files from and to the archival storage memory under control of the ARCHIVAL STORAGE MANAGEMENT routine.

### DETAILED DESCRIPTION OF THE INVENTION

### TABLE OF CONTENTS

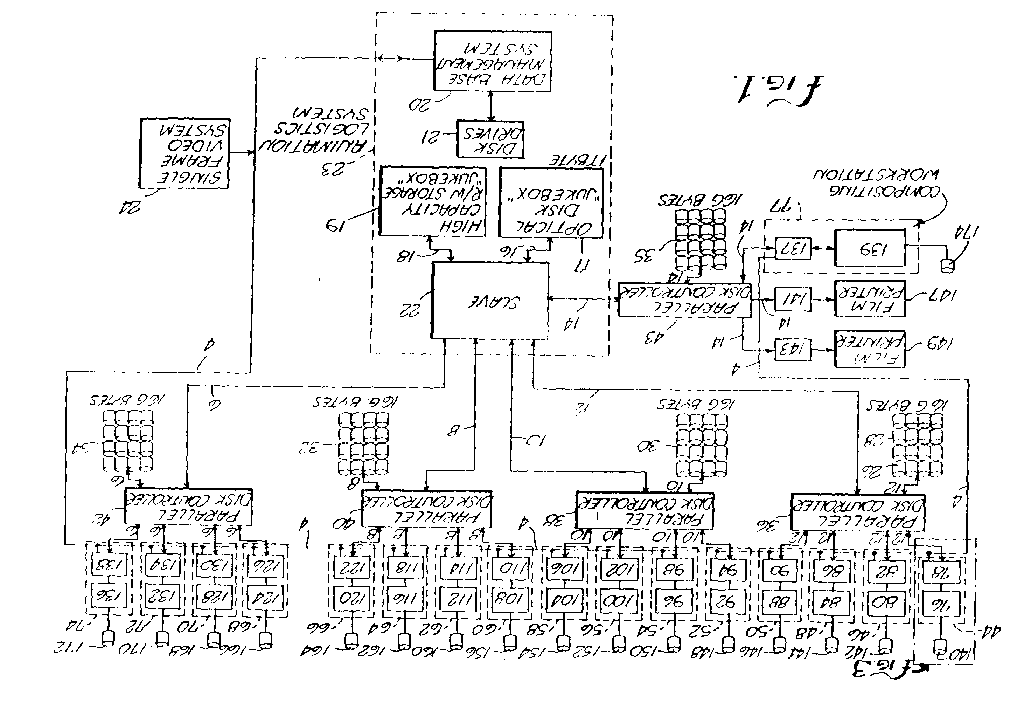

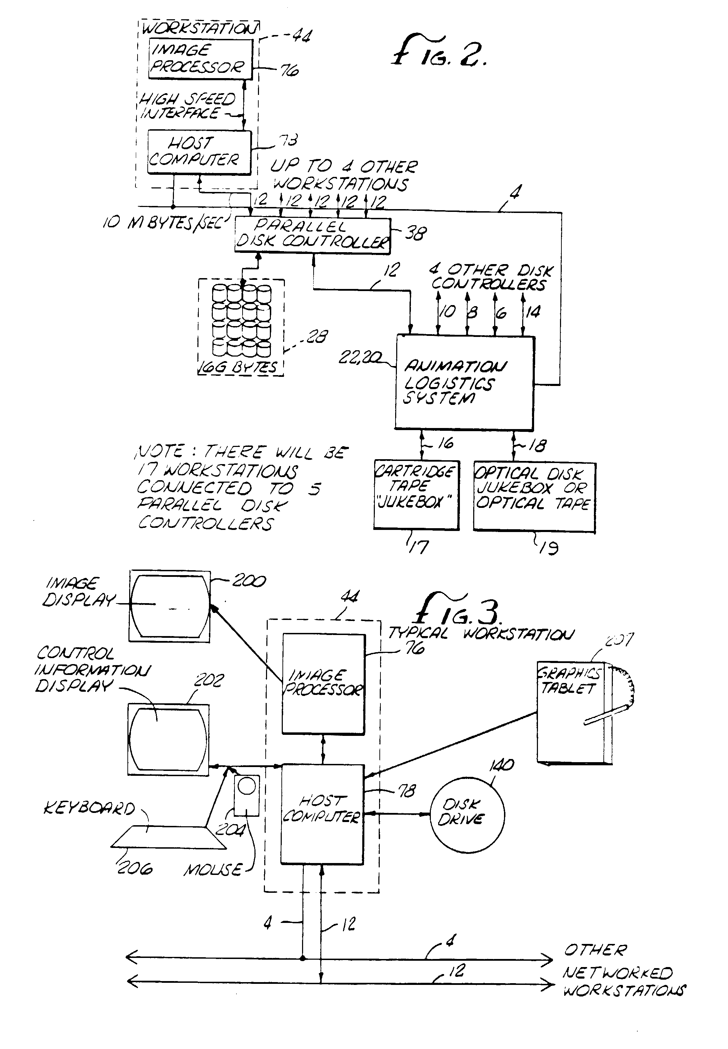

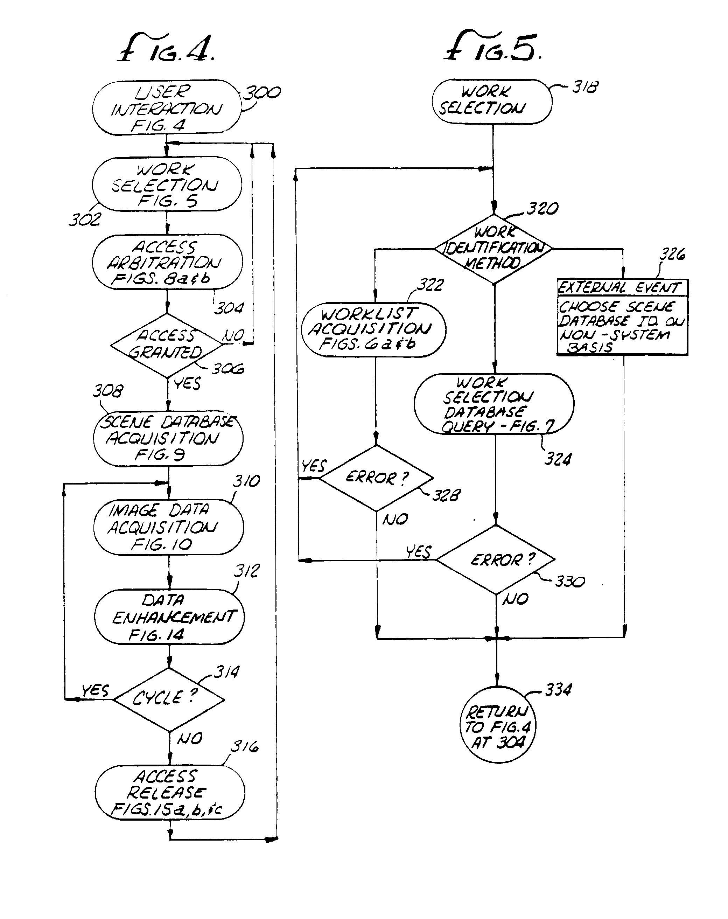

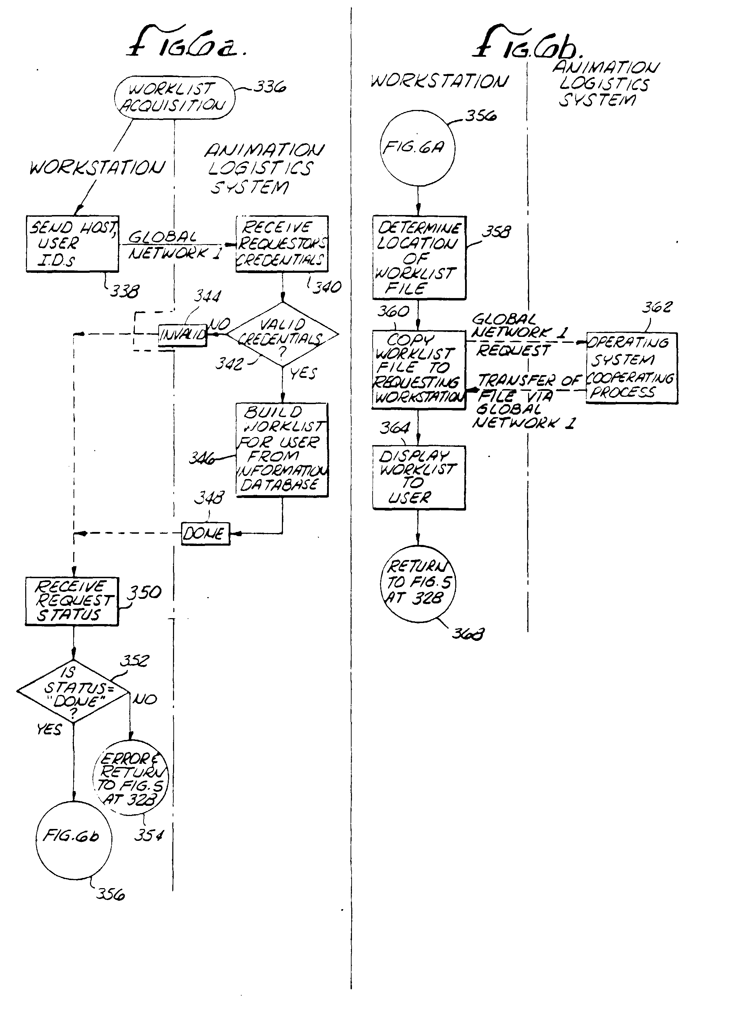

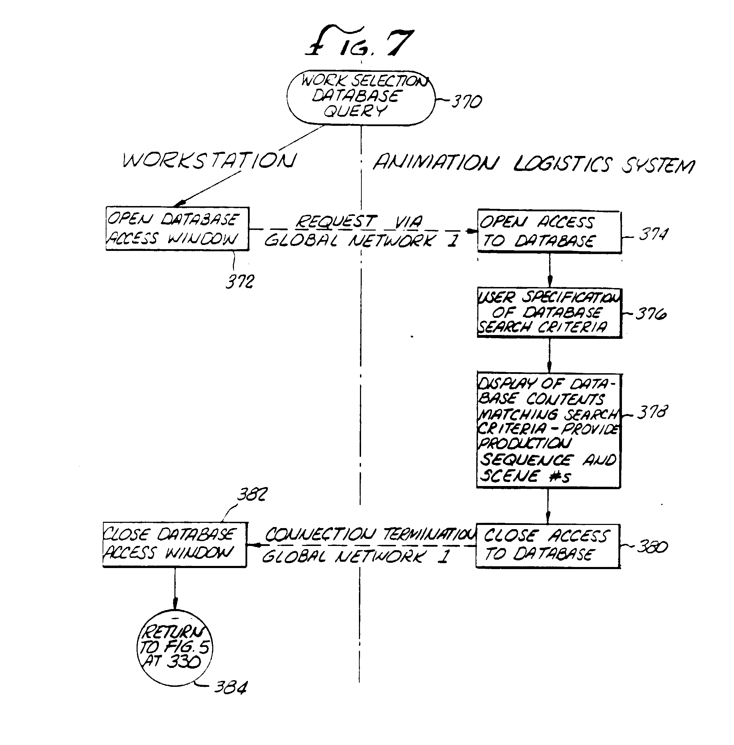

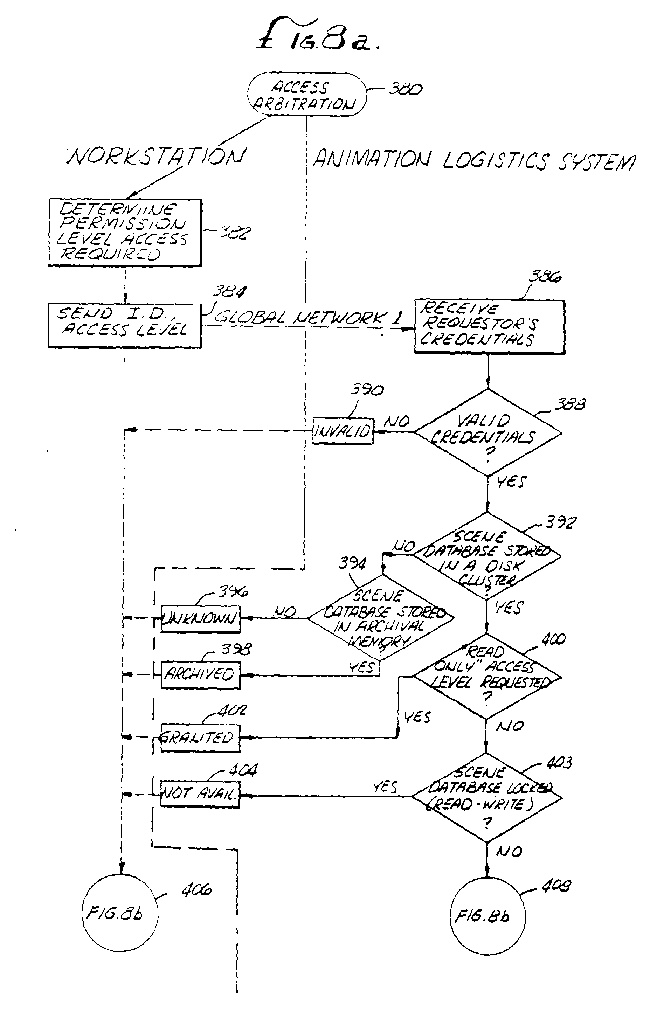

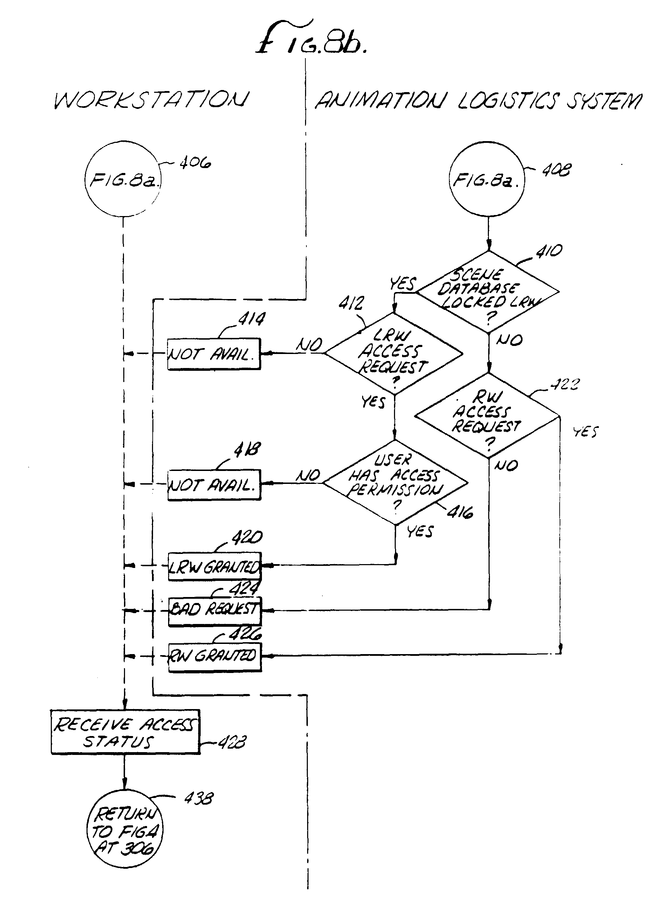

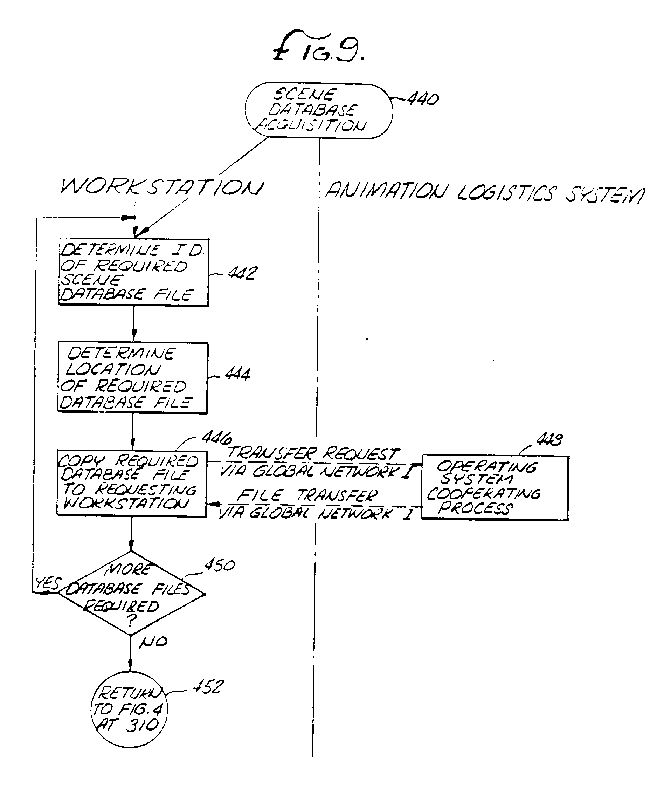

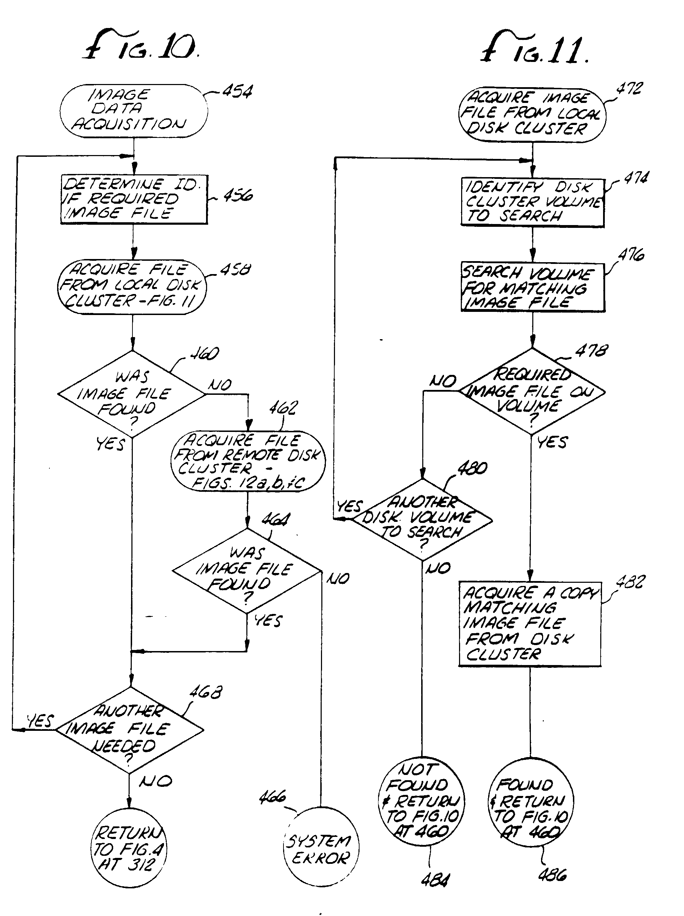

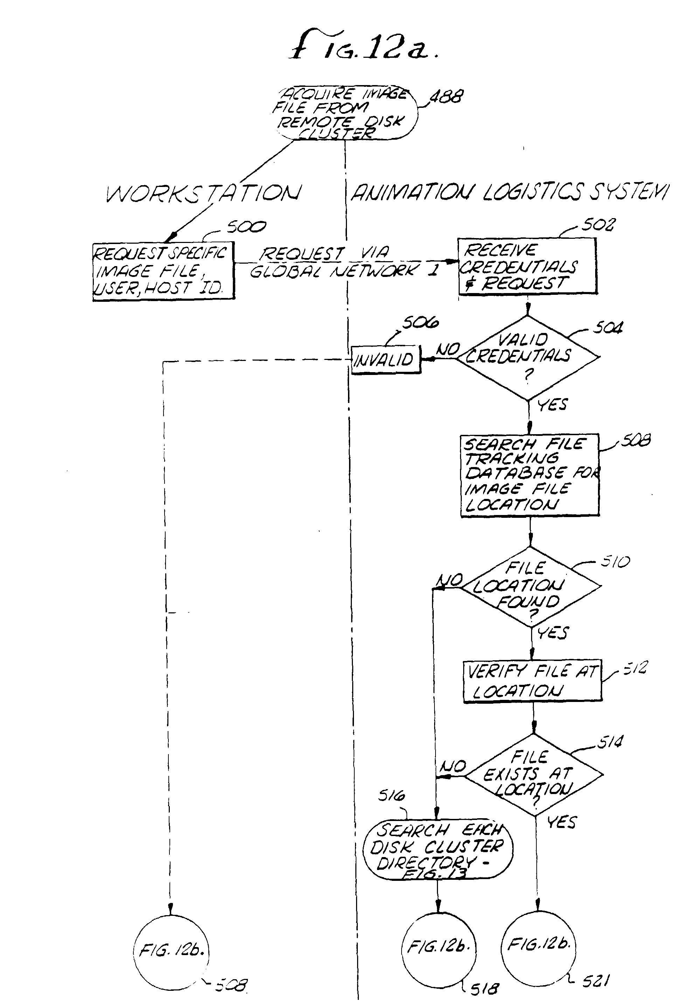

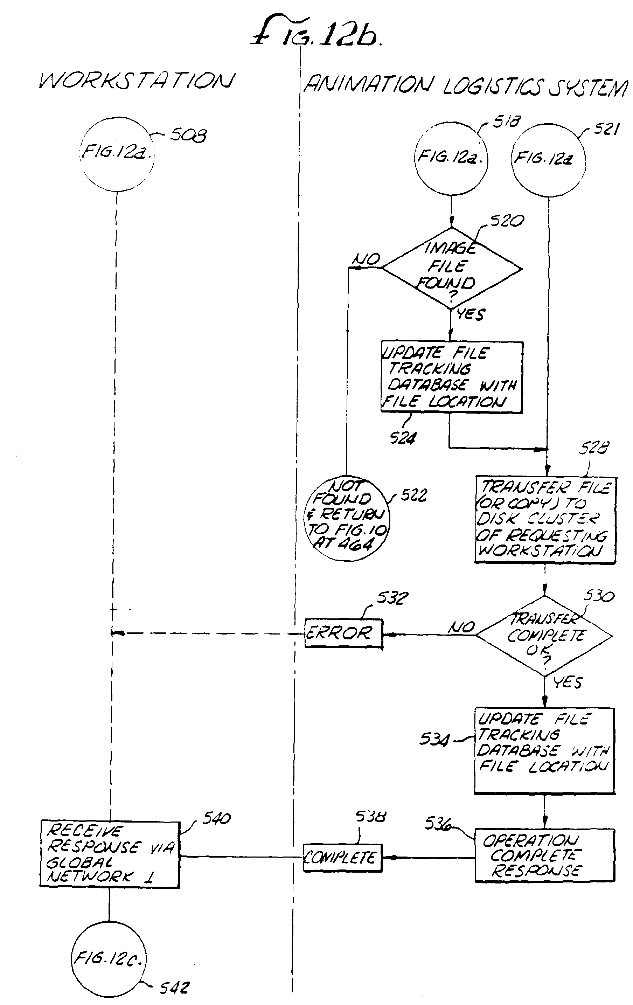

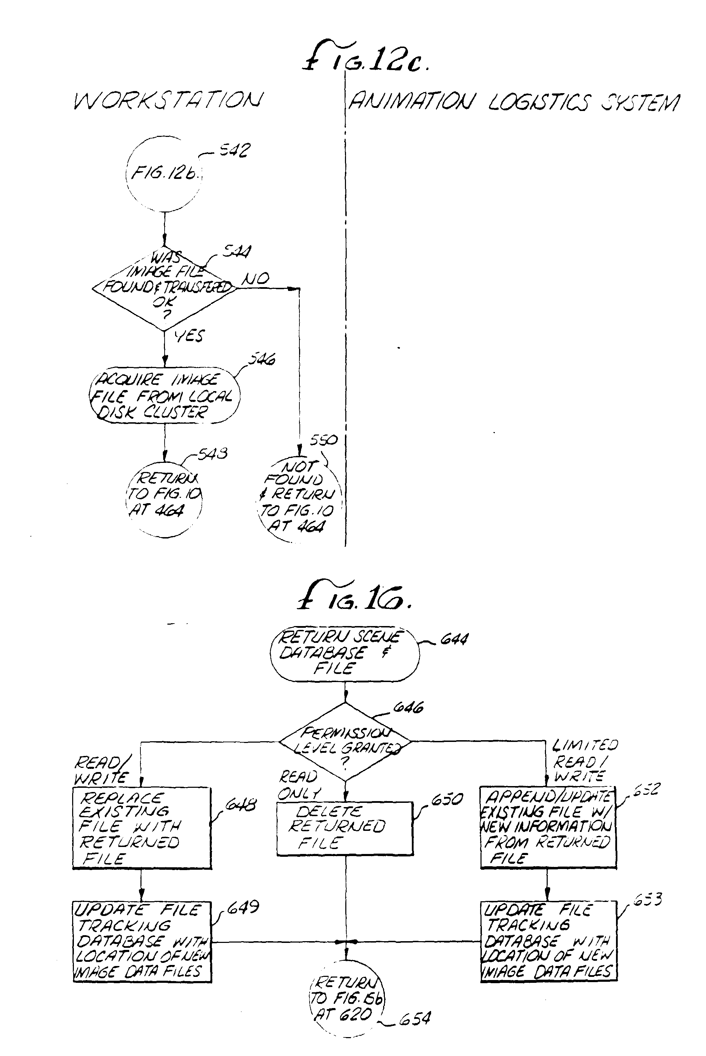

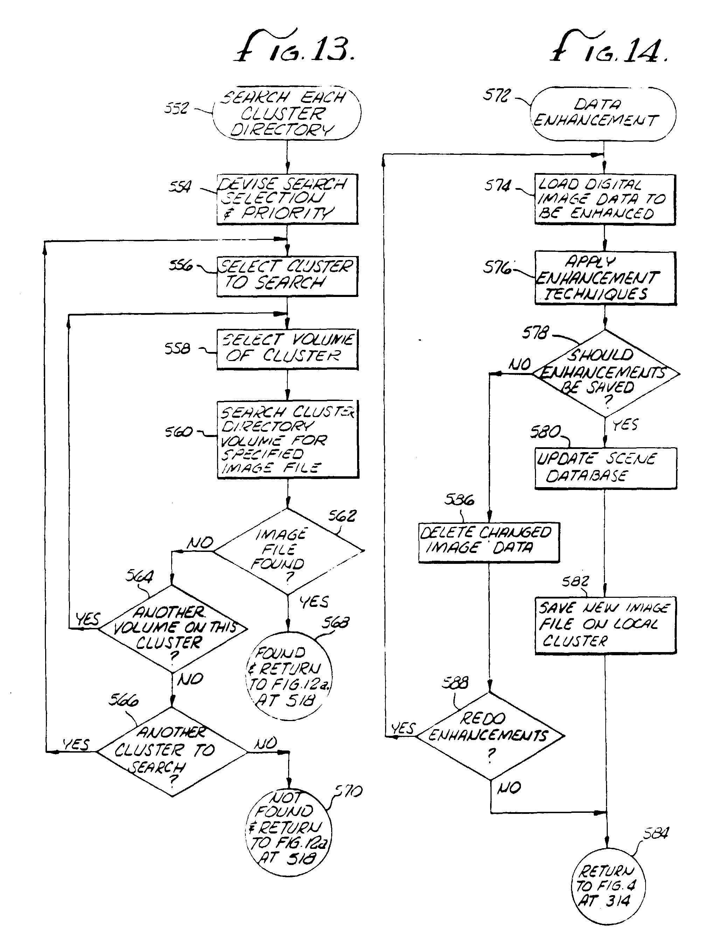

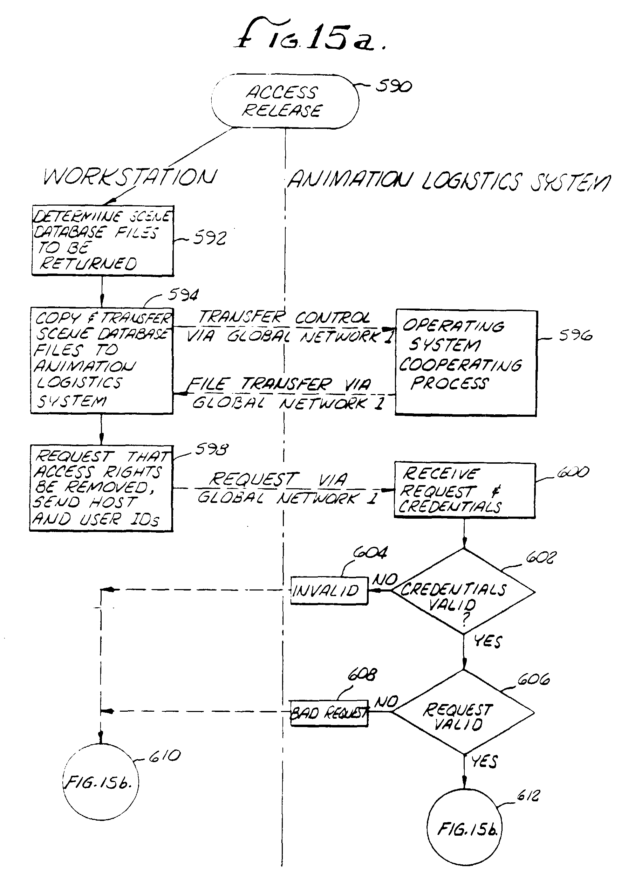

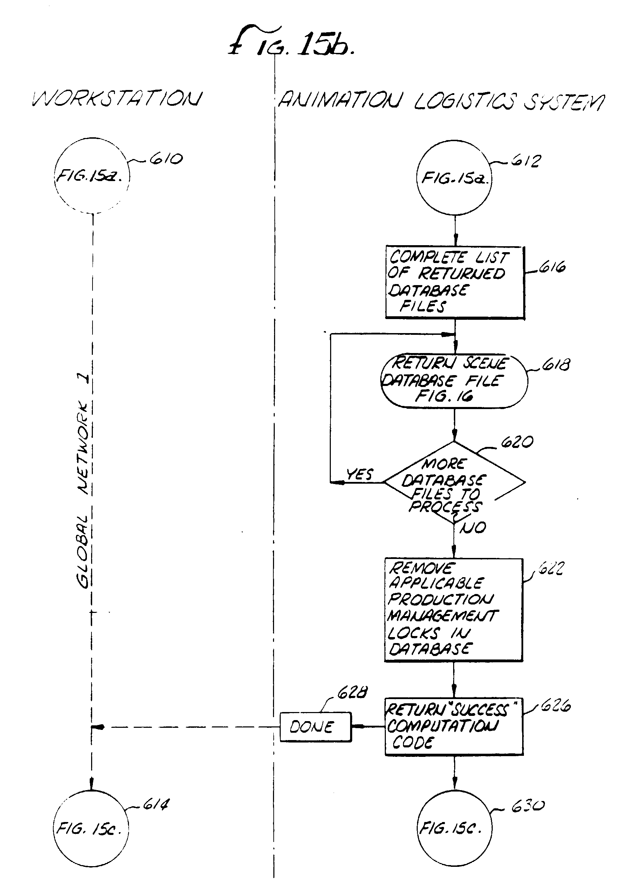

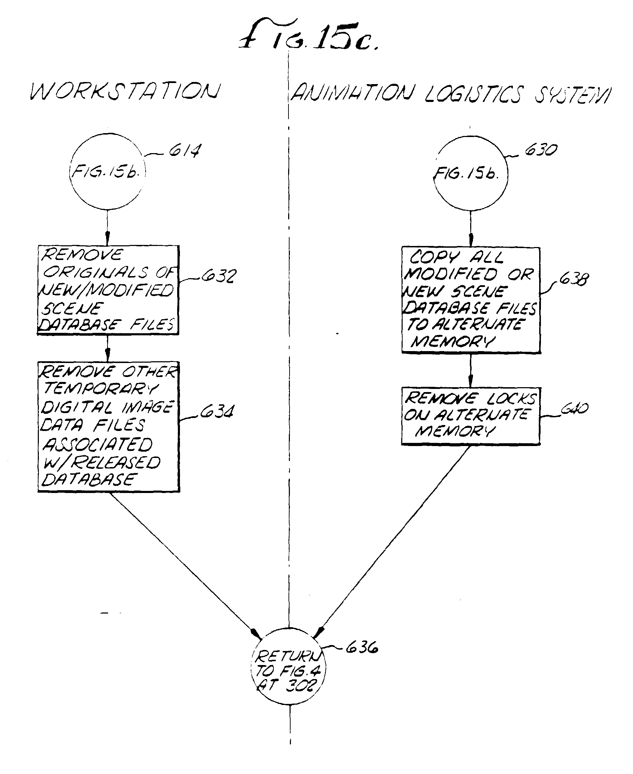

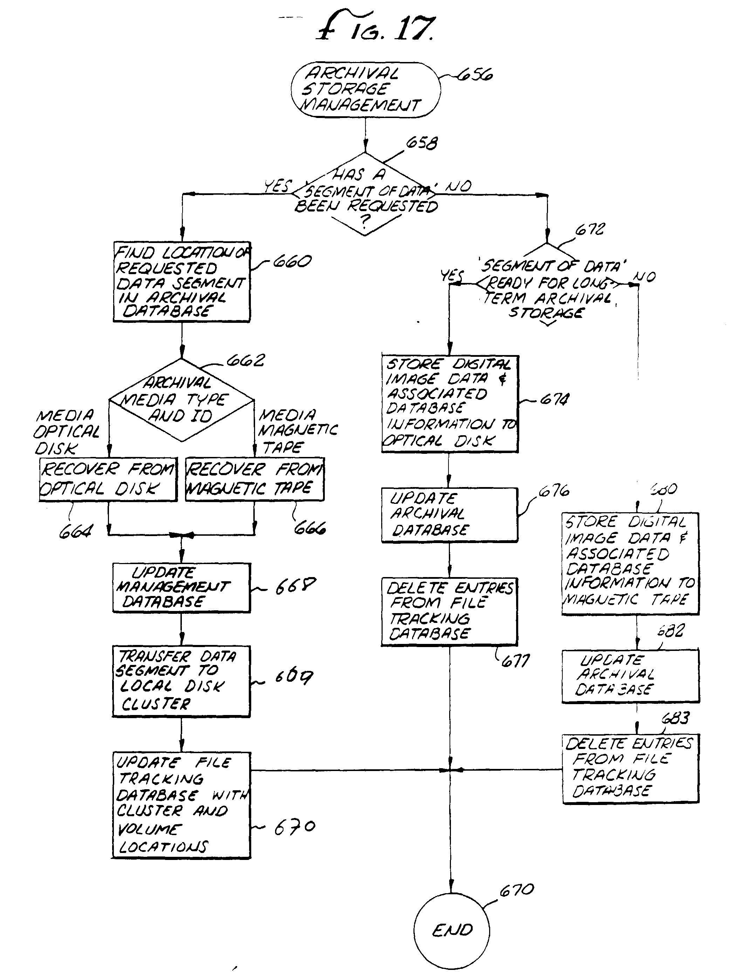

I. Architecture Overview (Figs. 1 and 2)
II. Workstations (Fig. 3)
III. Animation Logistics System (Figs. 1 and 2)
IV. Methods of Acquiring and Returning Both Scene Database Files and Image Data Files
   a) USER INTERACTION Routine (Fig. 4)
   b) WORK SELECTION Routine (Fig. 5)
   c) WORKLIST ACQUISITION Routine (Figs. 6a and 6b)
   d) WORK SELECTION DATABASE QUERY Routine (Fig. 7)
   e) ACCESS ARBITRATION Routine (Figs. 8a and 8b)
   f) SCENE DATABASE ACQUISITION Routine (Fig. 9)
   g) IMAGE DATA ACQUISITION Routine (Fig. 10)
   h) ACQUIRE IMAGE FILE FROM LOCAL DISK CLUSTER Routine (Fig. 11)
   i) ACQUIRE IMAGE DATA FILE FROM REMOTE DISK CLUSTER Routine (Figs. 12a, 12b and 12c)
   j) SEARCH EACH CLUSTER VOLUME DIRECTORY Routine (Fig. 13)
   k) DATA ENHANCEMENT Routine (Fig. 14)
   l) ACCESS RELEASE Routine (Figs. 15a, 15b and 15c)
   m) RETURN SCENE DATABASE FILE Routine (Fig. 16)
   n) ARCHIVAL STORAGE MANAGEMENT Routine (Fig. 17)

### I. Architecture Overview (Figs. 1 and 2)

Fig. 1 depicts a schematic block diagram of a computer information processing device 2 (or computer animation production system) for processing digital image data. The computer animation production system 2 consists of two global area networks. In the preferred embodiment, the first global area network 4 communicates digital control information to seventeen information processing devices (workstations) 44, 46, 48, 50, 52, 54, 56, 58, 60, 62, 64, 66, 68, 70, 72, 74 and 77) (44-77). Control information includes database information managed by a Database Management System 20 within Animation Logistics System 23 which is dedicated to both the first and second global area networks (4, 6, 8, 10, 12 and 14).

The database of the Animation Logistics System 23 is a relational database stored on magnetic disk drive(s) 21. The Animation Logistics System 23 improves overall system efficiency by coordinating the production work at the distributed workstations 44-77 and providing control information to the workstations 44-77. Specifically, the Animation Logistics System 23 in the preferred embodiment performs the following functions:
1) production scheduling,
2) production tracking and report generation,
3) scene database management,
4) digital image database management, and
5) storage allocation.

A more detailed discussion regarding each of these tasks will be presented in Section III (infra). The Animation Logistics System 23 is the "backbone" of the computer animation production system 2 since it provides control over an enormous amount of digital image data and database information.

The second global area network provides a series of high speed buses 6, 8, 10, 12 and 14 for the transfer of digital image data to and from workstations 44-77. In the preferred embodiment, the second global area network 6, 8, 10, 12 and 14 links together to a series of storage units 17, 19, 28, 30, 32, 34, and 35 which together maintain approximately 1.25 million mega bytes of data. The storage units consist of optical disk 17, high capacity tape drive 19, and disk cluster locations 28, 30, 32, 34 and 35. The Animation Logistics System 23 keeps track of the storage allocation on each of these storage units.

The Animation Logistics Systems 23 includes Slave 22 for performing archival storage operations for the optical disk or "jukebox" 17 and high capacity tape drive(s) or "jukebox" 19, both for storing large amounts of digital image data for long periods of time. More particularly, the high capacity tape drive(s) 19 is used for backups (i.e. in case of power loss, loss of equipment or human error) and for access of digital image data not currently stored on the disk clusters 28, 30, 32, 34 and 35. Tape drive(s) 19 is also used as a secondary data storage device for files that are not currently accessed as often as those files presently on the disk clusters 28-30, 32, 34 and 35. In the preferred embodiment, storage requirements for tape drive(s) 19 are in the range of several hundred gigabytes to a terabyte of data. Typically, the files on tape drive(s) 19 consist of a mix of ASCII files and compressed binary image data files.

Optical disk(s) 17 also involves a high volume of archival image data storage. In the preferred embodiment, optical disk(s) 17 is a write-once disk system which maintains finished scenes for future reference. The files stored on the optical disk also consist of a mix of ASCII files and compressed binary data files, with similar storage data requirements as the tape drive system 19.

Both forms of archival storage (i.e. tape drive(s) 19 and optical disk(s) 17 perform an extremely valuable function in preserving the finished animation film product against loss or damage. The Animation Logistics System 23 is responsible for archiving all of the information needed to make finished products as well as maintaining a record of the location of all of the image data stored on either form of archival storage. (See Section III).

Each high speed bus 6, 8, 10, 12 and 14 of the second global area network is coupled to a parallel disk controller 42, 40, 38, 36 and 43 which acts as a local area network coordinating access to each of the disk clusters 28, 30, 32, 34 or 35. Each disk cluster 28, 30, 32, 34 and 35 preferably consists of 16 disk drives having a total storage capacity of 16 gigabytes of digital image data. The preferred embodiment of the parallel disk controller is a "Strategy 1™" disk controller sold by Maximum Strategy, Inc., 160 East Virginia Street, San Jose, California 95112, and a user's manual entitled "Strategy 1--File Access Controller" is herein incorporated by reference.

In the preferred embodiment, parallel disk controllers 42, 40, 88, 36 and 43 are capable of transferring data at a rate of up to four times the speed of a normal disk controller, by reading and writing to four of the sixteen disks of a particular cluster in parallel. Since the data transfers are very efficient and do not take long to complete, up to five workstations can operationally share a single parallel disk controller and its associated disk cluster. The disk space available in a cluster provides an abundance of disk capacity for the associated workstations. It is envisioned that the disk clusters will be utilized for scenes that are currently being accessed or those scenes anticipated to be accessed. More particularly, the scenes that are anticipated to be accessed are prefetched and stored on the appropriate clusters in anticipation of a particular workstation needing to access the digital image data. This strategy substantially reduces the number of inter-clustered transfers required. Preferably, the parallel disk controller enables the associated workstations to communicate in terms of logical blocks rather than physical disk parameters such as cylinders, tracks and sectors. This strategy relieves the user and the workstation of the burden of dealing with lower level access details including logical to physical block mapping, block management and data error recovery.

Whenever data is transferred from the archival memory devices 17 or 19 to a particular workstation, the image data is sent to the parallel disk controller associated with the requesting workstation and stored in the local disk cluster first. The parallel disk controller creates a copy of the digital image data and sends it to the requesting workstation. Other workstations connected to the parallel disk controller may have access to the requested digital image data after the requesting workstation has completed its present task. A more detailed description on this process is presented in Sections IV(g), IV(h), and IV(i).

Single frame video system 24 inputs artwork (i.e., backgrounds and character sketches) into the computer animation production system 2 by scanning the artwork and converting it into digital image data. The digital image data is sent by the first global area network 4 to a digitizing camera check workstation where a user cleans up the digitized images if necessary, etc. (See Section II).

Referring to Fig. 2, an alterate architecture for the computer animation production system 2 of Fig. 1 is depicted. Workstation 44, a parallel disk controller 38, and disk cluster 28 are shown connected to high speed bus 12 of the second global area network. By this arrangement, the coordination of archival storage 22 of digital image data and the digital control database 20 are merged into one super-computer labeled Animation Logistics System 22, 20. Both the first 4 and second 12 global area networks are connected to the Animation Logistics System 22, 20. The operation of the Animation Logistics System 22, 20 is precisely the same as the Animation Logistics System 23 (Fig. 1) discussed above, however, only one computer system instead of two performs both the archival storage operations and database control functions. Additionally, optical disk 19 and cartridge tape 17 are both attached to Animation Logistics System 22, 20 for storing both digital image data and control database information. For a more detailed discussion on the Animation Logistics System (Figs. 1 and 2) see Section III.

### II. Workstations (Fig. 3)

A more detailed discussion of the preferred embodiment of a workstation is now presented. In the preferred embodiment, each of the 17 workstations (44-77) comprise the same components as the workstation to be described and as shown in Fig. 3. Referring to Fig. 3, workstation 44 is coupled to both the first 4 and second 12 global area networks. The first global area network 4 communicates digital control information to workstation 44, and the second global area network 12 separately communicates digital image data to workstation 44. Workstation 44 consists of an image processor 76 and a host computer 78. Attached to image processor 76 is an image display 200 for displaying artwork and completed animation. Coupled to host computer 78 is control information display 202, keyboard 206 and mouse 204. Also coupled to the host computer 78 is a disk drive 140 for retaining operating system software (preferably a Unix operating system), local application software and database information received from the database 20 of the Animation Logistics System 23. Mouse 204, keyboard 206, and graphics tablet 203 enable a user at the workstation to communicate with host computer 78 by manipulating information on the control information display 202. Updating exposure-sheets, requests for digital image data, etc., are made by keyboard 206, mouse 204 or graphics tablet 203.

In the preferred embodiment, image processor 76 is a Pixar Image Computer by Pixar Inc., San Rafael, California 94913, which is designed to accommodate pixel digital image data. Four color pixels are stored as four 12-bit quantities, one for red, green, blue and alpha "channels" of a picture. Together, these four channels define the color (RGB) and transparencies (alpha) of any particular pixel location in memory. The images are stored on the local disk cluster 28, 30, 32, 34 or 35.

In the preferred embodiment, the host computer 78 is either a Sun Series 3, Silicon Graphics Iris 3100 series or a Dec micro VAXII/Ultrix system. The host computer coordinates all communications with the first and second global area networks 4 and 12, all interfacing with the user via keyboard 206, mouse 204, graphic tablet 203, and at disk drive 140.

Each workstation is capable of performing any of the following tasks:
1) digitizing camera checking,
2) cel coloring,
3) image compositing,
4) scene planning,
5) background painting,
6) color modeling, and
7) layout design.

As discussed earlier, the digitizing camera check workstation capability enables the user to correct digitized images by correcting color edges, etc. More particularly, areas not fully enclosed within lines are closed. Smudges are removed and cleaned-up frames are sent via one of the second global area network's high speed buses 6, 8, 10, 12 or 14 to a local disk cluster 28, 30, 32, 34 or 35. Character sketches are assumed to be black and white line drawings, pencil or ink, on standard animation paper. Backgrounds are assumed to be standard color background paintings, generally designed for scanning. Those skilled in the art are readily familiar with the various types of apparatus and techniques for digitizing and scanning artwork.

The cel coloring capability of the workstation enables a user to change the color of lines and fill in areas with arbitrary colors selected from a customized palette. The history of fills and touchups to each frame is saved in order to automatically repaint the artwork at a later time should the colors be redesigned.

The image compositing capability of the workstation enables the system to wipe, pan, truck, cross dissolve and fade. Additionally, filters for focusing, fogging, diffusion, and tinting can also be applied. This capability is driven by an exposure sheet (see Section III) which is generated by the scene planning capability of the workstation. More particularly, the scene planning capability enables the user to construct and update exposure sheets. Additionally, multiplaning can be implemented with controls for smooth interpolation of resizing, rotation, shearing and translation on individual levels.

The background painting capability of the workstation is designed for enabling the user to pan large backgrounds and paint desired areas. This capability includes painting brushes of different sizes and shapes, transparency, different styles of painting (including "airbrush," smear and blur), screens, lines, area clears and fills, palette control, picture storage and retrieval, cut and paste, magnification and cursor control.

The color modeling capability of the workstation enables a user to design palettes for use in the cel coloring and background painting capabilities. Individual colors can be mixed from the primaries (red, green and blue) or from the perpetual parameters (hue, saturation, and value). Palettes are designed by assigning desired colors to the desired locations in the palette. This capability enables the painter to capture desired colors as if he were painting with real oils. Layout capability enables the user to plan action: movement of characters over backgrounds, camera pans and zooms.

It is envisioned that each workstation will have several other capabilities, but for purposes of explaining the present invention, these capabilities need not be discussed. In sum, each workstation acts as a mini-production house with all of the capabilities of a traditional studio and more. In this way, the processing power of the computer animation production system 2 is dispersed along the first and second global area networks at workstations 44-76.

### III. Animation Logistics System (Figs. 1 and 2)

Due to the relative importance of the Animation Logistics System 23 (Fig. 1), a more detailed discussion of the pertinent functions and database content of the Animation Logistics System 23 is now presented. Recall that the Animation Logistics System 23 forms the "backbone" of the computer animation production system 2 for efficiently coordinating and controlling the entire production of feature-film animation. Earlier, a partial list of specific functions of the Animation Logistics System 23 was presented:
1) production scheduling,
2) production tracking and report generation,
3) scene database management,
4) digital image database management, and
5) storage handling.

The production scheduling capability of Animation Logistics System 23 includes all of the functions that interactively allow an administrator or supervisory person to establish or change the production priorities in the computer animation production system 2. The Animation Logistics System 23 maintains a separate Production Management Database which maintains all information needed to produce management reports detailing the exact production status on each scene and on the production as a whole. The following is a partial listing of the information maintained for each scene:
1) production number,
2) sequence number,
3) scene number,
4) number of frames,
5) lock status (i.e. read-write or limited read-write),
6) location status,
7) completion status (i.e. 20-30 tracking completion dates),
8) access frequency data, and
9) draft (i.e. script information).

Preferably, the information is structured in a table format in the form of a relational database. For a more detailed discussion regarding the structure and operation of relational databases, refer to C.J. Date, "An Introduction to Database Systems," Vol. 1, 4th Edition, Addison-Wesley (1986), which is herein incorporated by reference. The relational database enables users to perform powerful relational operations to retrieve and manipulate data in the Production Management Database. For example, a "SELECT" operation can be performed to retrieve progress information on all scenes associated with a particular production. In this way, status information on the production can be retrieved and a report on the progress of each scene can be generated.

For each entry or row in the Production Management Database, none, one or more entries are maintained on a File Tracking Database also maintained by the Animation Logistics System 23. The File Tracking Database provides the location of digital image data for each scene stored on disk cluster locations 28, 30, 32, 34 or 35. Each disk cluster is preferably separated into four volumes and each volume has a separate cluster volume directory associated with it. The File Tracking Database maintains the cluster and volume location for each image data file on the system. Normally, to perform a search of a particular cluster for a given scene, up to four accesses to the cluster directories would be necessary to locate the given scene. Whereas, the File Tracking Database would only require one access to locate the requested scene. The File Tracking Database and the Production Management Database together keep track of the location of image data, along with the status of each scene in the system (e.g., whether it has been digitized, colored, cut into a story reel, etc.). As stated earlier, this information can be delivered to the supervisory personnel in the form of a printed report.

Each entry on the Production Management Database corresponds to one or more scene databases which contains all of the information related to a scenes' organization and its informational content. Specifically, the scene database contains all the information required to access any of the files associated with a particular scene including exposure sheets, binding lists, scene composite databases and tests. Exposure sheets contain the bulk of information regarding a single scene: items such as fielding, timing, motion, special effects, cel order, etc. They are organized in the scene database reflecting the structure of the production, that is, they are retrieved by the production, sequence and scene numbers.

The binding list denotes the specific artwork version associated with each artwork designator listed in the exposure sheet. For example, there may be three different versions of a particular piece of artwork for the character, "Basil." The binding list designates which version of "Basil" should be retrieved when the actual digital image data is obtained from memory storage (i.e. disk cluster, archival storage, etc.). A separate database called the scene composite database links the appropriate binding list to an exposure sheet so that the proper version of the characters, etc., is shown in the appropriate order and sequence.

A "test" is a "dry run" of a scene (a trial of the animation) which is established by merging the exposure sheet and binding list together. The result of the test is saved in storage in the form of a composite digital image datafile.

The Animation Logistics System 23 also maintains an Archival Production Management Database (Archival Database) in the form of a relational database. The Archival Database keeps track of all files which are stored on optical disk 17 or high capacity tape drive 19 for temporary or long-term storage. A partial listing of the information stored in the Archival Database is the following:
1) production number,
2) sequence number,
3) scene number,
4) length,
5) storage media type,
6) storage media ID name, and
7) storage media location.

Items 5, 6, and 7 constitute the name and location of stored digital image data in either archival memory device 17 or 19. As the actual image data is stored on the archival memory devices 17 and 19, the Animation Logistics System 23 updates the Archival Database to insure that the archived files are properly tracked.

Animation Logistics System 23 also maintains a Worklist Database in the form of a relational database for providing production workflow. The production of an animated feature can be thought of as a pipeline, where the work to be performed generally proceeds from one area to another in a fixed sequence. The order is not always rigid, however; often a scene will have to be returned to a previous stage to be redone. The worklist provides an organization for which the users are provided work assignments for particular scenes, etc. The database for a partial list of the information stored in the worklist includes:
1) production number,
2) sequence number,
3) scene number,
4) scene footage,
5) scene status, and
6) redo flags and comments, etc.

Relational operations (i.e. SELECT operations, etc.) can be performed to retrieve worklist information regarding desired scenes of particular productions. To prevent concurrency situations, a locking mechanism will prevent more than one user from simultaneously trying to update the same worklist. (See Sections IV(b) and IV(c).)

When a particular user at a workstation requests a scene database file, the Animation Logistics System 23 allows the files to be accessed in one of three ways:
1) read-write status,
2) read-only status, and
3) limited read-write status.

In a multi-user system (in the preferred embodiment, 17 users could work simultaneously at the 17 workstations (44-76)) where more than one user can obtain a copy of a scene (i.e. digital image data and related databases inform) and make changes to it (read-write), there is a danger that information will be lost. This problem can be eliminated if only one user is given permission to change the file at any one time. The Production Management Database (discussed above) maintains a list of the available scenes and their associated files and whether any user has a copy of a scene checked out to their workstation with the intention of making changes to it (lock status). By only allowing one user to have "read-write" permission to the scene, the Animation Logistics System 23 can protect the integrity of the production data. If a workstation has a "read-write" lock on the file and another workstation requests the file "read-write", the requestor will be denied access (scene is locked) to the scene and an indication of the reason for denial as well as the identification of the workstation/user of that scene will be returned. For a more detailed discussion, see Section V(e). With this information, the operator of the requesting workstation may make inquiries via telephone or otherwise about the expected schedule of use of the requested scene.

It is envisioned that a user may wish to acquire a scene database file and the related image data files without affecting the contents of the files. For example, the user may wish to perform a test, look at frames, or perform other operations which do not affect the contents of the file. In these situations, "read-only" permission status is made available which enables a user to obtain a particular scene database file without being able to alter or add to the contents of the file. Essentially, a copy of the file is made available to the requesting user and this copy is not allowed to be returned to storage. The Animation Logistics System 23 does not track the number or location of the "read-only" copy because it will not alter the contents of the original file; it will eventually be deleted. For a more detailed discussion, see Section IV(m).

In other circumstances, it is envisioned that the work for a particular scene will be divided among several users of different workstations simultaneously (e.g., digitizing, camera, background, etc.). In these situations, a special set of rules is devised to allow the workstations to share the scene database file. The method envisioned enables each user to have a particular portion of the scene database file with "read-write" permission status to affect only their own particular portion of the scene file. This arrangement is known as "limited read-write" permission status. Upon completion of the assignment by each workstation, the updated portions of the scene database file and image data files will be returned and merged with one another to form newly updated scene database and image data files. For a more detailed discussion, see Section IV(m).

### IV. Methods of Acquiring and Returning Both Scene Database Files and Image Data Files

Referring to Figs. 4, 5, 6a, 6b, 7, 8a, 8b, 9, 10, 11, 12a, 12b, 12c, 13, 14, 15a, 15b, 15c, 16 and 17, a detailed discussion presenting the methodology of acquiring, using, and returning both image data files and scene database files is now presented.

### a) USER INTERACTION Routine (Fig. 4)

Referring to Fig. 4, a flow diagram entitled USER INTERACTION is shown for detailing the overall sequence of operations necessary for retrieving and returning scene database files and image data files. The oval shaped blocks depict subroutine calls which are more fully depicted in accompanying Figures. Referring to block 302 of Fig. 4, the routine WORK SELECTION (Fig. 5) (see Section IV(b)) is called to determine the production, sequence, and scene numbers (or identification) associated with a particular scene the user wishes to work on. During block 304, the ACCESS ARBITRATION routine (Figs. 8a and 8b) (see Section IV(e)) is called to determine whether anyone else on the computer animation production system 2 currently has access to the requested scene. The ACCESS ARBITRATION routine (Figs. 8a and 8b) (see Section IV(e)) determines the accessibility of a requested file by evaluating the permission status level of the requesting user and the requested file and returns either an "access granted" or "access not available" message. Processing continues to block 306 during which a determination is made on whether access to the requested scene has been granted. Assuming that access to the requested scene is not granted, processing continues to block 302, during which the user has the opportunity to select a new scene by obtaining different identification; the process starts over. Assuming that access is granted at blocks 304 and 306, processing continues to block 308, during which the routine SCENE DATABASE ACQUISITION (Fig. 9) (see Section IV(f)) is called.

The scene database, as stated earlier, contains all of the information about a particular scene including the computer exposure sheets, binding lists, scene version lists, tests, etc. (see Section III). The SCENE DATABASE ACQUISITION routine (Fig. 9) determines the location of the scene database file, obtains a copy of the file, and moves it to the local disk drive 140, 142, 144, 146, 148, 150, 152, 154, 156, 158, 160...174 associated with the requesting workstation 44-76. Once the scene database file has been obtained, the digital image data associated with the scene database is retrieved by the routine IMAGE DATA ACQUISITION (Fig. 10) (see Section IV(g)) at block 310. The IMAGE DATA ACQUISITION routine (Fig. 10) locates the digital image data file associated with the scene database file and, if needed, moves the image data to the disk cluster 28, 30, 32, 34 or 35 associated with the requesting workstation 44-76. When the digital image data resides at the local disk cluster, a copy of the image data file is made and sent to the requesting workstation. The user can make enhancements to the image data at his workstation during the DATA ENHANCEMENT routine (Fig. 14) (see Section IV(k)) during block 312.

During block 314, a determination on whether the user needs to acquire additional image data files for enhancement purposes is made. If the user wishes to continue, then processing continues at blocks 310, 312 and 314 until the user specifies that he/she is finished obtaining and updating image data. Assuming that the user does not wish to continue "cycling", processing continues at block 316, during which the ACCESS RELEASE routine (Figs. 15a, 15b, and 15c) (see Section IV(c)) is called.

The purpose of the ACCESS RELEASE routine (Figs. 15a, 15b and 15c) is for releasing access and returning both the scene database and the image data files which have been currently opened. Once the scene database and image database files have been released and returned, processing continues to block 302. During block 302, the user has the opportunity to restart the entire process of acquiring, using, and returning scene database files and related image data files. If the user does not wish to continue, the process simply halts and waits for the next command by the user.

### b) WORK SELECTION Routine (Fig. 5)

Referring to Fig. 5, a more detailed discussion of the WORK SELECTION routine (Fig. 5) is now presented. At block 320, a determination is made on which one of three different methods should be performed to obtain the identification of a requested scene database file. Assuming that the user wishes to obtain the identification from the worklist, processing continues at block 322, during which the WORKLIST ACQUISITION routine (Figs. 6a and 6b) (see Section IV(c)) is called. Recall that the worklist contains a list of assignments previously set up by the user's supervisor to inform him on what tasks to perform and on which scenes. The worklist also provides the identification associated with the requested scenes (see Section III). At block 328, a determination on whether an error occurred during the WORKLIST ACQUISITION routine (Figs. 6a and 6b) is made. Assuming that no error occurred during the routine, processing continues at block 334, during which processing returns to the USER INTERACTION routine (Fig. 4) at block 304.

Returning to block 328, if an error did occur during the WORKLIST ACQUISITION routine (Figs. 6a and 6b) (i.e. no worklist associated with the particular user), then processing continues at block 320. At this time, the user would have the opportunity of selecting a different identification method for determining the identification. Assume that the user knows that the scene he is supposed to work has a particular background or cel image which is associated with, for example, a rainstorm. The user can perform a query operation on the Production Management Database to obtain all scenes related to rainstorms. During block 324, the WORK SELECTION DATABASE QUERY routine (Fig. 7) (see Section IV(d)) is called to perform the appropriate relational database operation to perform the query. During block 330, a determination on whether any error occurred during the WORK SELECTION DATABASE QUERY routine (Fig. 7) is made. Assuming that no error occurred, processing continues at block 334, during which processing returns to the USER INTERACTION routine (Fig. 4) at block 304. Returning to block 330, if an error did occur during the WORK SELECTION DATABASE QUERY routine (Fig. 7), processing would return to block 320.

Assuming that there is no worklist associated with the user and that the user does not have enough information to perform a query on the Production Management Database, then the only way the user can obtain a scene database file is if he enters directly the production, sequence, and scene numbers. Typically, this occurs when a supervisor specifically instructs a user to obtain a particular scene and provides the identification information to the user external to the computer animation production system 2. During block 326, the external event occurs during which the user on a non-system basis obtains the identification for a particular scene database file. Processing continues at block 334, during which processing returns to the USER INTERACTION routine (Fig. 4) at block 304.

### c) WORKLIST ACQUISITION Routine (Figs. 6a and 6b)

Referring to Figs. 6a and 6b, a detailed discussion of the WORKLIST ACQUISITION routine referenced in the WORK SELECTION routine (Fig. 5) at block 322 is now presented. To illustrate the division of processing occurring at one of the workstations 44-77, and at the Animation Logistics System 23, Figs. 6a and 6b are separated into two portions. The left-hand side of the flow chart depicts processing at the requesting workstation, and the right-hand side of the flow chart shows processing at the Animation Logistics System 23. Lines in between both sides show flow of communications over the first or second global area networks. Dotted lines mean that the particular path shown is optional pending the outcome of a particular block.

During block 338 (Fig. 6a), the user at the requesting workstation sends a worklist request along with the host computer's and user's identification. At block 340, the requestor's credentials are received by the Animation Logistics System 23. During block 342, the Animation Logistics System 23 determines whether the host and user's identification are valid. If, for example, the user is not an authorized user of the system, then processing continues at block 344, during which a "invalid" message is sent back to the workstation over the first global area network 4 (Figs. 1 and 3). At block 350, the "invalid" message is received by the workstation 44-77. Assuming that the requestor's credentials are valid, processing continues at block 346 during which a worklist is built for the requesting user. Then during block 348, a "done" message is returned to the requesting workstation. At block 350, the "done" message is received by the workstation, and during block 352 the workstation determines if the status returned by the Animation Logistics System 23 is "done." If the status returned was an "invalid" message, processing returns with an error message to the WORK SELECTION routine (Fig. 5) at block 328. An error message is returned because something unusual has occurred--the user's credentials are invalid.

Assuming that at block 352 the status determined is "done," processing continues to block 356 and to Fig. 6b at block 358. During block 358, the location of the worklist file associated with the requesting user is determined. At block 360 (Fig. 6b), a worklist is copied by the requesting workstation and sent to the local disk drive associated with the work station. This step incorporates block 362 during which the operating system of the Animation Logistics System 23 coordinates processing over the first global area network 4 to transfer the worklist file to the requesting workstation. At block 364, the retrieved worklist is displayed to the user at the workstation. Lastly, during block 368, processing returns to the WORK SELECTION routine (Fig. 5) at block 328.

### d) WORK SELECTION DATABASE QUERY Routine (Fig. 7)

Referring to Fig. 7, a more detailed discussion of the WORK SELECTION DATABASE QUERY routine referenced during the WORK SELECTION routine (Fig. 5) at block 324 is now presented. At block 372, the user presents his query in the form, for example, of an SQL "SELECT" operation at the requesting workstation. This step effectively opens access to the Production Management Database or any of the other databases located on the system. The request is sent via the first global area network 4 and at block 374 the Animation Logistics System 23 receives the query. During block 374, the specified relational operation is performed according to the user's search criteria. During block 378, the results of the search are assembled into a table which provides the production, sequence, and scene numbers and other information for those scenes which match the search criteria. During block 380, access to the database is closed. Processing continues at the user's workstation, during which the database access window for the user is closed. During block 384, processing returns to the WORK SELECTION routine (Fig. 5) at block 330. At this time, the user can choose any one of the retrieved scene databases for performing further processing.

### e) ACCESS ARBITRATION Routine (Figs. 8a and 8b)

Referring to Figs. 8a and 8b, a more detailed discussion of the ACCESS ARBITRATION routine referenced during the USER INTERACTION routine (Fig. 4) at block 304 is now presented. The ACCESS ARBITRATION routine (Fig. 8a and 8b) verifies whether the user can be granted access to the scene database by evaluating the permission levels associated with the user and the scene database. Earlier, the permission levels were stated to be:
1) read-write status,
2) read-only status, and
3) limited read-write status. (See Section III.)

Processing begins at the user's workstation at block 382, during which the permission level of the user is determined according to the operation the user wishes to perform. During block 384, the identificational requested scene database along with the user's permission level are sent over the first global area network to the Animation Logistics System 23 and, during block 386, the user's credentials are received by the Animation Logistics System 23. At block 388, a determination (at the Animation Logistics System 23) is made on whether the user's credentials are valid. If the user has invalid credentials, during block 390 an "invalid" message is returned over the first global area network 4. The "invalid" message is received by the requesting workstation at block 428 (Fig. 8b). Assuming that the user's credentials are valid, processing continues at block 392.

During block 392, the Production Management Database is searched to determine whether the requested scene is stored in a row of the database. Assuming that scene is stored on the Production Management Database, the File Tracking Database is searched to determine if the requested scene database files are stored in one or more of the disk clusters 28, 30, 32, 34 or 35. Assuming that the requested scene database is not at any of the disk clusters 28, 30, 32, 34 or 35, then processing continues at block 394. During block 394, a search of the Archival Production Management Database is performed to determine if the requested scene database has been archived. If the scene database has not been archived, then during block 396 an "unknown" message is returned to the workstation at block 428 (Fig. 8b). Assuming that the scene database has been archived, then during block 398 an "archived" message is returned to the workstation at block 428 (Fig. 8b). Assuming that the user receives the "archived" message, the user can then separately initiate the ARCHIVAL STORAGE MANAGEMENT routine (Fig. 17) (see Section IV(n)) to move the desired scene database file from the particular archival media (tape drive 19 or optical disk 17) to the local disk cluster 28, 30, 32, 34 or 35 associated with the user's workstation 44-76. A more detailed discussion regarding the ARCHIVAL STORAGE MANAGEMENT routine (Fig. 17) will be discussed infra.

Returning to block 392 (Fig. 8a), assuming that the scene database file is stored in one of the disk clusters 28, 30, 32, 34 or 35, processing continues to block 400. During block 400, Animation Logistics System 23 determines if the user's permission level is "read-only status." The Animation Logistics System 23 determines the status of the requested scene database file by referring to the "lock" status of the scene database entry in the Production Management Database. Assuming that the permission level requested is read-only status, processing continues to block 402 during which a "granted" message is returned to the workstation at block 428 (Fig. 8b). However, if the permission level is not read-only status, then processing continues at block 403 During block 403, the Animation Logistics System 23 determines whether the scene database file is "locked" due to another user having access to the scene database file with read-write status. Recall that if a scene database file is "locked," the database cannot be changed by any user other than the read-write user who currently has access to it; nothing may be added or deleted from the scene database file. Therefore, if the scene database file is presently being accessed by someone who has read-write status, processing continues at block 404 during which a "not available" message is returned to the requesting workstation at block 428 (Fig. 8b). If the scene database file is not presently locked, then processing continues at block 410 (Fig. 8b).

During block 410, a determination of whether the scene database file is currently being accessed by another user under "limited read-write" status is made. If the scene database file is currently locked under the limited read-write status, processing continues at block 412 during which a determination on whether the requesting user has limited read-write status is made. Assuming that the requesting user does not have limited read-write status, then during block 414 a "not available" message is returned to the user's workstation at block 420. However, if the requesting user has limited read-write status, then processing continues at block 416. During block 416, a determination is made on whether the user wishes to access portions of the scene database file which are already accessed by another limited read-write user. Assuming that the user wishes to access portions of the scene database which are already accessed by current limited read-write users, then during block 418 a message "not available" is returned to the user's workstation at block 428. Information on which users currently have access is also provided. Assuming that the user receives access permission to the scene database file, then during block 420 a "limited read-write granted" message is returned and received by the user's workstation at block 428.

Returning to block 410, assuming that the scene database file is not locked under limited read-write status, processing continues at block 422. During block 422, a determination on whether the requesting user has read-write status is made. If the user does not have read-write status, then during block 424 a "bad request" message is returned to the requesting workstation at block 428. A "bad request" message occurs because the user has limited read-write status, however, the scene database does not have limited read-write status. There is an inconsistency in the way the scene database is set up and in the permission level of the user. The only way a user with limited read-write status can obtain a scene database file is if the scene database is also set up with limited read-write status. The scene database was not previously "locked" into limited read-write status by the supervisor to enable the user with the same status to obtain the file. The "bad request" message will inform the user to take appropriate actions to have the file locked properly.

Returning to block 422, assuming that the user has read-write status, processing continues at block 426 during which a "read-write-granted" message is returned to the requesting workstation at block 428. Processing returns at block 438 to the USER INTERACTION routine (Fig. 4) at block 306.

### f) SCENE DATABASE ACQUISITION Routine (Fig. 9)

Referring to Fig. 9, a detailed discussion of the SCENE DATABASE ACQUISITION routine (Fig. 9) referenced during the USER INTERACTION routine (Fig. 4) at block 308 is now presented. During block 442, the identification (production, sequence and scene numbers) for the requested scene database files is determined. Earlier, identification was obtained during the WORK SELECTION routine (Fig. 5) discussed earlier in Section IV(b). Then, during block 444, the location of the requested scene database files are determined by referencing the directory associated with the scene on disk drive 21. During block 446, the requested scene database files are transferred from disk drive 21 to the local disk drive 140...174 associated with the requesting workstation 44-76. This step involves the step of transferring the requested scene database from the Animation Logistics System 23 to the local disk cluster 28, 30, 32, 34 or 35 associated with the requesting workstation 44-77 over the global area network during block 448. Then during block 450, a determination of whether any more scene database files are required is made. If more scene database files are necessary, then processing continues at blocks 442, 444, 446, 448 and 450 until all of the required scene database files have been retrieved. Assuming that no more scene databases need to be accessed, then processing returns during block 452 to the USER INTERACTION routine (Fig. 4) at block 310.

### g) IMAGE DATA ACQUISITION Routine (Fig. 10)

Referring to Fig. 10, a detailed description of the IMAGE DATA ACQUISITION routine referenced during the USER INTERACTION routine (Fig. 4) at block 310 is now presented. The purpose of this routine is for determining location and acquiring image data files associated with the scene database files. During block 456, identification for the image data files associated with the selected scene database file are determined. Then, during block 458, the routine ACQUIRE FILE FROM LOCAL DISK CLUSTER (Fig. 11) (see Section IV(h)) is called. This routine checks the local disk cluster 28, 30, 32, 34 or 35 associated with the workstation 44-76 to determine if the image data file requested resides there. The IMAGE DATA ACQUISITION routine checks the local disk cluster first because in the majority of circumstances the requested image data file will have been previously saved on the local disk cluster in anticipation of the workstation's request. For a more detailed discussion, see Section III.

During block 460, a determination of whether the image data file was found is made. Assuming that the image data file cannot be found on the local disk cluster, then processing continues at block 462. During block 462, the ACQUIRE FILE FROM REMOTE DISK CLUSTER routine (Figs. 12a, 12b and 12c) (see Section IV(f)) is called to search the remaining disk clusters for the requested image data file. At block 464, a determination is made on whether the requested image data file had been found. Assuming that the image data file cannot be found on the remote disk clusters, then during block 466 a system error is returned to the user indicating that the requested image data file is not presently on any of the disk clusters 28, 30, 32, 34 or 35. The requested image data file may reside on one of the archival storage devices. If the file does not exist on the archival storage, then it probably never existed. The ARCHIVAL STORAGE MANAGEMENT routine (Fig. 17) may be separately initiated by the user to retrieve the image data file from archival storage (see Section IV(n)).

However, assuming that the image disk file is found at block 464, processing continues at block 468. Returning briefly to block 460, if the image data was found, then processing would also continue at block 468. In either case, during block 468, a determination is made on whether additional image data files need to be located and retrieved. Assuming that additional image data files are needed, then processing continues at blocks 456, 458, 460, 462, 464, 466 and 468 until all of the required image data files are obtained. This scenario may occur, for example, when the user requests a "test" performance of the images associated with a particular scene database file. According to the exposure sheets and the binding list, the appropriate image data files will be obtained to assemble an entire scene. After all of the image data files have been obtained, additional processing will be required to combine the image data in the appropriate fashion called for by the exposure sheet. Assuming that all of the necessary image data files have been obtained, processing continues at block 470 during which processing returns to the USER INTERACTION routine (Fig. 4) at block 312.

### h) ACQUIRE IMAGE FILE FROM LOCAL DISK CLUSTER Routine (Fig. 11a)

Referring to Fig. 11, a detailed description of the ACQUIRE IMAGE FILE FROM LOCAL DISK CLUSTER routine which was referenced during the IMAGE DATA ACQUISITION routine (Fig. 10) at block 426 is now presented. Each workstation attached to a local disk cluster has a private directory associated with at least one of four separate partitions or volumes of the cluster. In the preferred embodiment, the disk clusters 28, 30, 32, 34 or 35 contain four partitions, however, the disk clusters can be partitioned as many times as logically feasible. At block 474, the workstation will identify the disk cluster volume associated with the workstation to begin searching. Each volume contains the following subdirectory of information for each file:
1) file name,
2) file location,
3) file length,
4) file modify time,
5) entry user identification #, and
6) entry type.
During block 476, the workstation will search the volume directory for the requested digital image data file. Then, during block 478, a determination is made on whether the requested digital image data file has been found. As stated earlier, preferably the requested image data file will have been previously stored at the local disk cluster to expedite searching. However, assuming that the digital image data file is not listed on the currently searched volume directory then processing will continue at block 480. At block 480, a determination on whether another volume should be searched is made. Assuming there are four volumes associated with each cluster, up to three more volumes need to be searched. Processing continues to blocks 474, 476, 478, and 480 until the requested digital image file is found or until all of the volume directories have been searched. Assuming that all of the volume directories have been searched, processing continues at block 484. During block 484, an encoded result "not found" is returned to the IMAGE DATA ACQUISITION routine (Fig. 10) at block 460.

Returning to block 478 (Fig. 11), assuming that the requested image data file has been found, processing continues at block 482. During block 482, a copy of the requested image data file is transferred from the local disk cluster to the requesting workstation. At block 486, a "found" message is returned to the IMAGE DATA ACQUISITION routine (Fig. 10) at block 460.

### i) ACQUIRE IMAGE DATA FILE FROM REMOTE DISK CLUSTER Routine (Figs. 12a, 12b and 12c)

In situations where ACQUIRE IMAGE FILE FROM LOCAL DISK CLUSTER routine (Fig. 11) is unsuccessful, the ACQUIRE IMAGE FILE FROM REMOTE DISK CLUSTER routine (Figs. 12a, 12b and 12c) is called to retrieve the requested image data file from a remote cluster location 28, 30, 32, 34 or 35 and deliver it to the local cluster associated with the requesting workstation 44-77. At block 500, the requesting workstation initiates the formal request for acquiring the specified image data file as well as other information including the user and workstation identification. The request is sent over the first global area network 4 to the Animation Logistics System 23 and is received at block 502. During block 504, the Animation Logistics System 23 determines if the credentials of the user's and workstation's identification are valid. If the credentials are invalid, then an "invalid" message is returned and received by the requesting workstation at 540 (Fig. 12b). Assuming that the requestor's identification is valid, then processing continues at block 508.

At block 508, the Animation Logistics System 23 searches the File Tracking Database for the location (cluster and volume identification) of the requested image data file. During block 510, a determination is made on whether the requested image file location has been found. Assuming that the location has not been found, processing continues at block 516 during which the SEARCH EACH DISK CLUSTER DIRECTORY routine (Fig. 13) (see Section IV(j)) is called. Typically, the requested image data file will be indexed by the File Tracking Database. However, if a malfunction occurred, for example, and the File Tracking Database did not have up-to-date records regarding the location (cluster and volume numbers) for the requested image data file, then a search would have to be made on each of the volume directories on each of the clusters individually to insure that the image data file was not been overlooked. Due to the processing time required to search each volume directory on each cluster, this procedure is avoided where possible. After the SEARCH EACH DISK CLUSTER DIRECTORY routine (Fig. 13) is performed, processing continues to block 518 and then to block 520 (Fig. 12b). At block 520, a determination on whether the image data file has been found is made. Assuming that the image data file has not been found, then at block 522 "not found" is returned to the IMAGE DATA ACQUISITION routine (Fig. 10) at block 464. However, assuming that the digital image data has been found, at block 524 the File Tracking Database is updated with the current file location (cluster and volume identification) of the requested image file. Processing continues at block 528 which will be discussed shortly.

Returning now to block 510 (Fig. 12a), assuming that the image data file location has been found on the File Tracking Database, processing continues to block 512 during which the Animation Logistics System 23 verifies that the image file actually exists at the location specified by the File Tracking Database. This procedure is provided as a safeguard for insuring that the File Tracking Database is currently up-to-date. At block 514 a determination on whether the requested image data file exists at the specified location is made. Assuming that the requested image data file does not exist at the specified location, processing continues at block 516, during which the SEARCH EACH DISK CLUSTER DIRECTORY routine (Fig. 13) is called (as discussed above). However, assuming that the requested image data file does exist at the specified location, processing continues to block 521 and then to block 528 (Fig. 12b).

Regardless of the path taken to block 528 (either from block 524 or block 522), a copy of the requested image data file will be made if the image data file is presently being accessed, or the image data file will be moved entirely to the local cluster associated with the requesting workstation if no workstation is currently working with the image data file. This process reduces unnecessary image file duplication and provides a natural migration of the image data files to clusters where they are needed. During block 530, a determination on whether the transfer is complete is determined. If the transfer is not complete, then an "error" message is returned to and received by the workstation at block 540. However, assuming the transfer is complete, then processing continues at block 534. Assuming that the file is moved in its entirety, without making a copy of the file, then the File Tracking Database will be updated with the new location (cluster and volume numbers) of the image data file. At block 536 and block 538, the Animation Logistics System 23 returns a "complete" message to the requesting workstation over the first global area network. Processing continues at block 542 and to block 544 (Fig. 12c). At block 544, the workstation determines whether the file has been located and transferred. If, for some reason, the file has not been both located and transferred, processing will continue at block 550 during which a "not found" message is returned to the IMAGE DATA ACQUISITION routine (Fig. 10) at block 464. However, assuming that the image data file has been found and transferred, then processing continues at block 546, during which the ACQUIRE IMAGE FILE FROM LOCAL DISK CLUSTER routine (Fig. 11) (see Section IV(h)) is called to obtain the image data file from the local cluster. Processing continues at block 540 during which processing returns to the IMAGE DATA ACQUISITION routine (Fig. 10) at block 464.

### j) SEARCH EACH CLUSTER VOLUME DIRECTORY Routine (Fig. 13)

Fig. 13 is a flow diagram of the SEARCH EACH CLUSTER VOLUME DIRECTORY routine which was referenced during the ACQUIRE IMAGE FILE FROM REMOTE DISK CLUSTER routine (Figs. 12a, 12b and 12c) at block 516. At block 554, a search scenario is selected. More particularly, because a search of the volume directories associated with the local disk cluster were previously performed by the ACQUIRE IMAGE FILE FROM LOCAL DISK CLUSTER routine (Fig. 11), there is no reason to search these directories again. Therefore, the search will be devised so that only the volume directories for the remaining clusters will be searched. Processing continues at block 556, during which the first disk cluster directory to be searched is selected. Then at block 554 one of the four volumes of the selected disk cluster is chosen. At block 560, a search is performed on the cluster volume directory for the requested image data file. During block 562 a determination on whether the digital image data file is located on the current cluster volume directory is made. Assuming that the digital image data file is not located on the present cluster volume directory, then processing continues at block 564.

During block 564, another volume directory is chosen from the current cluster. Processing continues at blocks 558, 560, 562 and 564 until the requested image data file is found or until all of the volume directories of the current cluster have been searched. If the requested digital image data file is found on one of the volume directories of the current cluster, processing continues from block 562 to block 568. During block 568 a message "found" is returned to the ACQUIRE IMAGE FILE FROM REMOTE DISK CLUSTER routine (Figs. 12a, 12b and 12c) at block 518. However, assuming that the requested digital image data file has not been found on any of the volume directories of the current cluster, then processing will continue from block 564 to block 566, during which a determination is made on whether any other disk cluster 28, 30, 32, 34 or 35 of the computer animation production system 2 should be searched.

Assuming that there are still other disk clusters that have not been searched, processing continues at blocks 556, 558, 560, 562, 564, 566 until the requested image data file is found or until all of the volume directories of each of the clusters 28, 30, 32, 34 or 35 have been searched. Assuming that all of the disk clusters 28, 30, 32, 34 or 35 have been searched and the image data file is not found, processing continues at block 570, during which a "not found" message is returned to the ACQUIRE IMAGE FILE FROM REMOTE DISK CLUSTER routine (Figs. 12a, 12b and 12c) at block 518. Eventually, the "not found" message works its way back to the IMAGE DATA ACQUISITION routine (Fig. 10) at block 468 where a system error is returned to the user as discussed earlier in Section IV(g). The system error indicates that the digital image data file is not present on any one of the disk clusters. The user of the system will be alerted of the system error and may retrieve the digital image data file from archival storage by initiating the ARCHIVAL STORAGE MANAGEMENT routine (Fig. 17) (see Section IV(n)), assuming that the file actually exists.

### k) DATA ENHANCEMENT Routine (Fig. 14)

Fig. 14 is a flow diagram of the DATA ENHANCEMENT routine referenced during the USER INTERACTION routine (Fig. 4) at block 312. At block 574 the digital image data to be enhanced is loaded into the image processor 76 (Fig. 3) of the workstation 44 (Fig. 3). Then, during block 576, any one of the various capabilities of the workstation is initiated including cel coloring, image compositing, color modeling, scene planning, layout design or background painting (see Section II). Then, during block 578, a determination on whether the enhancements should be saved is made. Enhancements would be saved in a disk file space in the cluster volume currently not previously allocated to the user. Assuming that the enhancements are not going to be saved, then processing continues at block 586. At block 586, the image data which has been enhanced is deleted. At block 558, a determination is made on whether the user would like to redo any of the enhancements on the same image data file. Assuming that the user wishes to start over again and enhance the same image data file, processing continues at blocks 574, 576, 578, 586 and 588 until the user decides to save the enhancements or exit the routine. Assuming that the user wishes to exit the routine, processing continues from block 588 to block 584. During block 584, processing returns to the USER INTERACTION routine (Fig. 4) at block 314.

Returning to block 578, assuming that the user decides that the enhancements should be saved, processing continues at block 580. During block 580, the scene database files are updated to reflect the current status of the scene. At block 582, the new version of the image data file is saved on the local disk cluster and at block 584, processing returns to the USER INTERACTION routine (Fig. 4) at block 314.

### l) ACCESS RELEASE Routine (Figs. 15a, 15b and 15c)

Figs. 15a, 15b and 15c depict a flow diagram of the ACCESS RELEASE routine referenced during the USER INTERACTION routine (Fig. 4) at block 316. This routine assures that scene database files and image database files are not improperly saved or improperly deleted.

At block 592, the user determines which scene database files and their associated image data files need to be returned. Then, during block 594, a copy of the scene database files are transferred to the Animation Logistics System 23 (more particularly, to disk drive 21) which is coordinated by the operating system of the computer animation production system 2 at block 596. Then, during block 598, the workstation requests that the access rights to the scene database files be removed. The host's and user's identification along with the release access request are sent over the first global area network 4 to the Animation Logistics System 23 and received by it at block 600. During block 602 the identification credentials are checked. If the credentials are invalid, then an "invalid" message at block 604 is returned to the workstation via the first global area network 4. However, assuming that the credentials are valid, processing continues at block 606. During block 606, a determination on whether the request is valid is made. This step is performed to ensure that the requested release properly operates on valid files. For example, if the scene database files are being returned by a user who does not exist, then a "bad request" message is returned at block 608. However, assuming that the request is valid, processing continues at block 612 and then to block 616 (Fig. 15b).

During block 616, a complete list of the scene database files to be returned is tabulated. Processing continues at block 618 during which the RETURN SCENE DATABASE FILE routine (Fig. 16) (see Section IV(m)) is called to evaluate the permission level of the user and to return one scene database file at a time according to the permission level (i.e. read-write, read-only, limited read-write) of the user. Depending on the permission level status of the user, the returned scene database file will either be deleted, saved or saved in part. Processing continues at block 620, during which a determination on whether any more scene database files need to be processed is made. Assuming that there are more scene database files to be returned, then processing continues at blocks 618 and 620 until all of the specified scene database files are returned. Assuming that no more scene database files need to be returned, then processing continues at block 622. During block 622, the entries corresponding to the returned scene database files on Production Management Database are updated by removing all locks on the returned scene database files. Processing continues at block 626 during which an encoded result "success" is formulated and is sent to the workstation by the first global area network 4 at block 628. After the return operation has been completed and the "done" message is sent to the workstation, processing occurs concurrently at both the workstation and the Animation Logistics System 23 as shown by Fig. 15c.

Referring to block 632 (Fig. 15c), the workstation removes all of the original copies of the scene database files currently stored on the local disk 140-174. Earlier, copies of the scene database files were made and sent at block 594 to the Animation Logistics System 23. Now that the scene database files have been returned, there is no reason to continue to retain additional copies of the files at the local disk 140-174. Additionally, at block 634, all image data files associated with the released scene database files which were created or enhanced under read-only status are deleted from the local cluster. The read-only image data files are only copies of the original file which do not have to be saved. At block 636 processing returns to the USER INTERACTION routine (Fig. 4) at block 302.

Concurrent with the operations performed by blocks 632 and 634, the Animation Logistics System 23 at blocks 638 and 640 performs a series of backup operations. Specifically, at block 638, a copy of the modified scene database files are stored in an alternate memory area (no shown). Additionally, at block 640, any locks that may have been associated with the scene database are removed from the corresponding entry of the Production Management Database in the alternate memory. At block 636, processing also returns to the USER INTERACTION routine (Fig. 4) at block 302.

### m) RETURN SCENE DATABASE FILE Routine (Fig. 16)

Fig. 16 is a flow diagram of the RETURN SCENE DATABASE FILE routine referenced during the ACCESS RELEASE routine (Figs. 15a, 15b and 15c) at block 618. During block 646, a determination of the permission level associated with the user is made. Assuming that the user has a permission level status of "read-write", processing continues to block 648. During block 648, the original scene database file is replaced with the new and modified scene database file returned during block 594 of the ACCESS RELEASE routine (Figs. 15a, 15b and 15c). Then, during block 649, the File Tracking Database is updated with the new cluster and volume locations of the modified image data files associated with the returned scene database files.

Returning to block 646, if the permission level status of a user is "read-only", the file returned during block 594 of the ACCESS RELEASE routine (Fig. 15a, 15b and 15c) will be deleted during block 650. Recall that any user may request files on a "read-only" permission level in order to perform test composites, look at frames, or other operations that will not affect the content of the production file. Once the read-only scene database file copies are returned, there is no reason to store them and, therefore, they are deleted. Lastly, if the permission level of the user is determined to be limited read-write at block 646, then during block 652 the additional or updated portions of the modified scene database file will be appended or updated to the original scene database file. Processing will continue at block 653, during which the File Tracking Database is updated with the cluster and volume locations of the modified image data files associated with the returned scene database files. Regardless of the permission level status of the user, processing will continue from blocks 649, 650 or 653 to block 654, during which processing returns to the ACCESS RELEASE routine (Figs. 15a, 15b and 15c) at block 620.

### n) ARCHIVAL STORAGE MANAGEMENT Routine (Fig. 17)

Fig. 17 is a flow diagram of the ARCHIVAL STORAGE MANAGEMENT routine which may be initiated by the user of a workstation during the ACCESS ARBITRATION routine (Figs. 8a, 8b and 8c) (see Section IV(e)). At block 658, a determination is made on whether a requested segment of data (including one or more files or a scene (many files)) has been requested from archival storage or whether the segment of data will be stored to archival storage. Assuming that a request for the segment of data has been initiated, processing continues at block 660. During block 660, the location of the requested segment of data is determined by referencing the Archival Production Management database. During block 662, the archival medium type and the storage media identification are determined. Assuming that the requested segment of data is stored on optical disk 17, processing continues at block 664 to obtain the requested segment of data from optical disk 17. However, if the data segment is stored on high capacity tape drive 19, then processing continues at block 666, during which the requested segment of data is obtained from tape drive 19. Regardless of which archival medium (17 or 19) the requested segment of data is stored on, processing will continue at block 668 during which the Production Management Database is updated with the requested data information. Then, at block 669, the requested segment of data is transferred over the second global area network to the local disk cluster of the requesting workstation. The associated parallel disk controller 36, 38, 40, 42 or 43 will attempt to place the new segment of data in the cluster associated with the requesting workstation. If there is insufficient free space available to retain all of the new files in the reserved portion, then another portion of the cluster may be used to handle the overflow by creating an addendum to the private directory associated with the requesting workstation. In either case, the directory associated with the workstation must be updated to reflect the new files stored there. Additionally, the File Tracking Database maintained by the Animation Logistics System 23 is also updated to reflect the cluster and volume locations associated with the new data segment. Processing returns to the calling program at block 670.

Returning to block 658, if a segment of data has not been requested, then processing continues at block 672. An assumption is made that the ARCHIVAL STORAGE MANAGEMENT routine (Fig. 17) has been called to store a file in archival storage. During block 672 a determination is made on whether the data segment is being stored for a long term or short term. Assuming that long term archival storage is required, processing continues at block 674 during which the data segment is stored on optical disk 17. Long term storage for optical disks may last up to approximately 100 years, which is more than an adequate time frame for storing the file. Processing continues at block 676 during which the Archival Production Management Database is updated with the new archival file locations of the data segment information. Then during block 677, the stored data segment entries are deleted from the File Tracking Database to indicate that the stored file no longer exists on any cluster. At block 670, processing returns to the calling program.

Returning to block 672, if the data segment needs to be stored for a relatively short term (less than 10 years), then processing continues at block 680 during which the data segment is stored on high capacity tape drive 19. A typical scenario requiring short term storage involves situations where a particular scene is not ready for further enhancements. The artwork is stored on tape 19 to free up space on the disk clusters. Processing continues at block 682 during which the Archival Production Management Database is updated to reflect the new file locations for the data segment. Then during block 683, the stored file entries of the data segment are deleted from the File Tracking Database to indicate that the stored file no longer exists on any cluster. Processing returns to the calling program at block 670.

This invention has been described in an exemplary and preferred embodiment, but is not limited thereto. Those skilled in the art will recognize that a number of additional modifications and improvements can be made to the invention without departure from the scope as defined in the appended claims. For example, a number of software and hardware design methodologies and architectures in any number of different software languages will be suitable for implementing the disclosed invention.

## Claims

1. A computer image production system enabling users to efficiently access, display, review, develop, and enhance digital image data organized as one or more image files, through a plurality of information processing devices (44, 46, ..., 74, 77), the system having a logistics system (23) for storing the one or more image files and for maintaining control data relating to each of the one or more image files, the plurality of information processing devices (44, 46, ..., 74, 77) having access to the control data stored in the logistics system (23) through a first network (4) coupling each of the plurality of information processing devices (44, 46, ..., 74, 77) to the logistics system (23), the plurality of information processing devices (44, 46, ..., 74, 77) having access to the image files through a second network (6, 8, 10, 12, 14), characterized in that:
the second network (6, 8, 10, 12, 14) comprises a plurality of independent high-speed data buses, each of which couples the logistics system (23) to a controller means (36, 38, 40, 42, 43), the controller means (36, 38, 40, 42, 43) for controlling the transfer of the one or more image files between the logistics system (23) and a temporary storage device (28, 30, 32, 34, 35) coupled thereto, the controller means also for controlling access to the transferred one or more image files stored in the temporary storage device (28, 30, 32, 34, 35) among a subset (e.g. 44, 46, 48, 50) of the plurality of information processing devices (44, 46, ..., 74, 77) directly coupled to the temporary storage device (28, 30, 32, 34, 35) through the controller means (36, 38, 40, 42, 43).

2. The apparatus of claim 1 wherein the temporary storage device (28, 30, 32, 34, 35) is a disk cluster comprising a plurality of disk drives.

3. The apparatus of claim 2 wherein the controller means comprises a parallel disk controller capable of accessing more than one of the plurality of disk drives of the temporary storage device in parallel.

4. The apparatus of claim 1 wherein the logistics (23) system (23) further comprises archival memory means (17, 19) for storing the one or more image files and/or the control data for long periods of time.

5. The apparatus of claim 2 wherein the archival memory means (17, 19) is one or more optical disc configurations for storing the one or more image files and/or the control data.

6. The apparatus of claim 2 wherein the archival memory means (17, 19) is one or more high capacity tape drive systems for storing the one or more image files and/or the control data.

7. The apparatus of claim 2 wherein the control information includes archival file location information for image files stored in the archival memory means (17, 19), and wherein the logistics system (23) further comprises production management database means (20) for maintaining the archival file location information as an archival database.

8. The apparatus of claim 5 wherein the archival database is a relational database for relating the archival file location information to the image files stored in the archival memory means (17, 19).

9. The apparatus of claim 1 wherein each of the plurality of information processing devices (44, 46, ..., 74, 77) is a computerized user workstation for enabling at least one user to develop, utilize, and enhance the one or more image files and/or the control information related to the one or more image files.

10. The apparatus of claim 1 or 8 wherein the control information includes production information needed to generate production management reports, and wherein the logistics system (23) further comprises management database means (20) for relating the production information to the one or more image files as a production management database.

11. The apparatus of claim 10 wherein the production management database is a relational database for relating the production information to the one or more image files.

12. The apparatus of claim 1 or 11 wherein the control information includes file location information for each of the image files stored in one or more of the temporary storage devices (28, 30, 32, 34, 35), and wherein the logistics system (23) further comprises management database means (20) for maintaining the file location information as a file tracking database.

13. The apparatus of claim 12 wherein the file tracking database is a relational database for relating the file location information to each of the one or more image files stored in the temporary storage devices (28, 30, 32, 34, 35).

14. The apparatus of claim 1, 11 or 13 wherein the control information includes production workflow information for the one or more image files and/or the control information, and wherein the logistics system (23) further comprises database management means (20) for maintaining the production workflow information as a worklist database.

15. The apparatus of claim 14 wherein the worklist database is a relational database for relating the production workflow information to the one or more image files and/or the control information.

16. The apparatus of claim 14 or 15 wherein the logistics system (23) arbitrates access to each of the one or more image files and their related production workflow information.

17. The apparatus of claim 16 wherein the arbitration performed by the logistics system (23) allows only one of the one or more information processing devices (44, 46, ..., 74, 77) to update one of the one or more image files and its related production workflow information at any one time.

18. The apparatus of claim 16 or 17 wherein the arbitration performed by the logistics system (23) allows one or more of the plurality of information processing devices (44, 46, ..., 74, 77) to obtain a copy of one of the one or more image files for read-only purposes only.

19. The apparatus of claim 16, 17 or 18 wherein the arbitration performed by the logistics system (23) allows one of the one or more information processing devices (44, 46, ..., 74, 77) to update an assigned portion of one of the one or more image files and a corresponding portion of its related production workflow information.

20. A method of efficiently processing digital image data, organized as one or more image files, using a computer image production system, the production system comprising a logistics system (23) for storing and arbitrating access to the one or more image files and for maintaining and coordinating access to control information related to each of the one or more image files, a plurality of workstations (44, 46 ..., 74, 77) for accessing, displaying and enhancing images represented by the one or more image files, the logistics system (23) coupled to the workstations (44, 46 ..., 74, 77) by a first network (4) for transferring the control information between the logistics system (23) and the one or more workstations (44, 46 ..., 74, 77), the logistics system (23) in communication with the workstations (44, 46 ..., 74, 77) through a second network (6, 8, 10, 12, 14) for transferring the one or more image files between the workstations (44, 46 ..., 74, 77) and the logistics system,
characterized in that:
the second network comprises a plurality of high-speed data buses (6, 8, 10, 12, 14) each of which couples the logistics system (23) to a controller means (36, 38, 40, 42, 43) for controlling the transfer of image files between the logistics system and a temporary storage device (28, 30, 32, 34, 35) coupled thereto, and for controlling access to the transferred image files stored in the temporary storage device (28, 30, 32, 34, 35) among a subset of the plurality of workstations (e.g. 46-50) directly coupled to the temporary storage device (e.g. 28) through the controller means (e.g. 36), said method comprising the steps of:
sending a first request for at least one of the one or more image files from a requesting one (e.g. 44) of the plurality of workstations (44, 46 ..., 74, 77) to the temporary storage device (e.g. 28) directly coupled to the requesting workstation (e.g. 44);
if the requested at least one image file is stored in the directly coupled temporary storage device (e.g. 28), transferring the requested at least one image file from the directly coupled temporary storage device (e.g. 28) to the requesting workstation (e.g. 44);
if not, sending a second request for the requested at least one image file from the requesting workstation (e.g. 44) to the logistics system (23) over the first network (4);
determining where in the production system the requested at least one image file is located;
if the requested at least one image file is located within one of the one or more temporary storage devices (e.g. 30, 32, 34, 35) not directly coupled to the requesting workstation (e.g. 44):
transferring over the second network (6, 8, 10, 12, 14) the requested at least one image file from its current location in one of the not directly coupled temporary storage devices (e.g. 30, 32, 34, 35) to the directly coupled temporary storage device (e.g. 28); and
providing the requested at least one image file to the requesting workstation (e.g. 44).

21. The method of claim 20 wherein the step of determining the location in the production system of the requested at least one image file is accomplished by referencing the control information maintained by the logistics system (23).

22. The method of claim 20 further comprising the steps of:
providing a file tracking database maintained by a database management system (20) of the logistics system (23);
maintaining entries in the file tracking database for any of the one or more image files stored in the one or more temporary storage devices (28, 30, 32, 34, 35), each of the entries specifying location of the image file associated with the entry; and
wherein the step of determining the location of the requested at least one image file further comprises the step of determining whether the requested at least one image file is contained in any of the not coupled temporary storage devices (e.g. 30, 32, 34, 35) by searching the file tracking database for one of the entries associated with the requested at least one image file.

23. The method of claim 22 wherein the step of determining where in the production system the requested at least one image file is located further comprises the steps of:
if none of the entries of the file tracking database are associated with the requested at least one image file, determining whether the requested at least one image file is contained in one of the not directly coupled temporary storage devices (e.g. 30, 32, 34, 35) by searching each of the not directly coupled temporary storage devices (e.g. 30, 32, 34, 35) for the requested at least one image file;
if the requested at least one image file is found:
transferring over the second network (e.g. 8, 10, 12, 14) the requested at least one image file from its current location in one of the not directly coupled temporary storage devices (e.g. 30, 32, 34, 35) to the directly coupled temporary storage device (e.g. 28);
providing the requested at least one image file to the requesting workstation (e.g. 44); and
creating an entry in the file tracking data base associated with the requested at least one image file specifying its location in the directly coupled temporary storage device (e.g. 28).

24. The method of claim 23 wherein the logistics system (23) comprises archival memory means (17, 19) for storing the image files and their related control information for long periods of time, and wherein the step of determining the location of the requested at least one image file further comprising the steps of:
if the requested at least one image file is not found in the temporary storage devices (28, 30, 32, 34, 35), determining whether the requested at least one image file is located within the archival memory means (17, 19); and
if yes:
accessing the requested at least one image file from the archival memory device (17, 19);
transferring the requested at least one image file over the second network (e.g. 6) from the logistics system (23) to the directly coupled temporary storage device (e.g. 28; and
providing the requested at least one image file to the requesting workstation (e.g. 44).

25. The method of claim 24 further comprising the steps of:
providing an archival database maintained by a database management system (20) of the logistics system (23);
maintaining entries in the archival database for any of the image files stored in the archival memory means (17, 19) of the logistics system (23), each of the entries of the archival database specifying location of the image file associated with the entry; and
wherein the step of determining whether the requested at least one image file is contained within the archival memory means (17, 19) further comprises the step of searching the archival database for one of the entries associated with the requested at least one image file.

26. The method of claim 20, 23 or 24 wherein the step of providing the requested at least one image file to the requesting workstation (e.g. 44) further includes the step of transferring a copy of the requested at least one image file from the directly coupled temporary storage device (e.g 28) to the requesting workstation (e.g. 44).

27. The method of claim 22 wherein the step of determining whether the requested at least one image file is contained in any of the not coupled temporary storage devices (e.g. 30, 32, 34, 35) further comprises the step of verifying that the requested at least one file is stored at the location specified by the entry associated with the requested at least one image file.

28. The method of claim 27 wherein the step of verifying further comprises the steps of:
if the requested at least one image file is stored at the specified location, transferring the requested at least one image file from the specified location to the directly coupled temporary storage device (e.g. 28) through the logistics system (23);
if the requested at least one image file is not stored at the specified location, searching each of the not directly coupled temporary storage devices (e.g. 30, 32, 34, 35) for the requested at least one image file.

29. The method of claim 28 wherein the step of searching each of the not directly coupled temporary storage devices (e.g. 30, 32, 34, 35) further comprises the steps of:
if the requested at least one image file is found, transferring the requested at least one image file to the directly coupled temporary storage device (e.g. 28); and
if the requested at least one image file is not found, sending a not found message to the requesting workstation (e.g. 44).

30. The method of claims 20, 23, 24, 26, 28 or 29 wherein the transfer of the requested at least one image file from the not directly coupled temporary storage device (e.g. 30, 32, 34, 35) to the directly coupled memory device (e.g. 28) is made through the logistics system (23).

31. The method of claims 23, 24, 26, 28 or 29 wherein the step of transferring the requested at least one image file from the not directly coupled temporary storage device (e.g. 30, 32, 34, 35) to the directly coupled temporary storage device (e.g. 28) further comprises the step of updating the file tracking database to specify where in the directly coupled temporary storage device (e.g. 28) the requested at least one image file is stored after the transfer.

32. The method of any of the foregoing claims wherein the image files represent one or more cels, the cels comprising one or more frames, the frames comprising one or more scenes, the scenes organized as a production in accordance with a script, organization and content of each of the scenes defined by a scene plan in accordance with the script, the method further comprising the steps of:
providing a scene database maintained by a database management system (20) of the logistics system (23); and
creating one or more scene database files within the scene database for each of the scenes of the production, each of the one or more scene database files comprising data defining the content and organization for each of the scenes in accordance with the scene plan for each the scenes, the data defining content and organization including data identifying the image files representative of the images comprising each of the one or more scenes.

33. The method of claim 32 further comprising the steps of:
transmitting a request for access to one or more of the scene databases from the requesting workstation (e.g. 44) to the logistics system (23) over the first network (4);
receiving at least one of the one or more scene database files of the requested one or more scene databases at the requesting workstation (e.g. 44); and
wherein the requested at least one image file is identified by the at least one received scene database file.

34. The method of claim 33 further comprising the steps of:
releasing the requested at least one image files; and
releasing the accessed one or more scene databases when no longer required.

35. The method of claim 32 further comprising the step of arbitrating access to the requested one or more of the scene databases, the step of arbitrating further comprising the steps of:
requesting a permission level for the requested one or more scene databases based on operations to be performed on the requested at least one image files identified by the one or more of the scene database files of the requested one or more scene databases; and
sending the requested permission level along with the request for the one or more scene databases.

36. The method of claim 35 wherein the step of arbitrating further comprises the steps of:
determining at the logistics system (23) whether each of the requested one or more the scene databases has a permission status of unlocked or locked;
if the permission status of the requested one or more scene databases is not locked, sending the one or more of the scene database files of the requested one or more scene databases to the requesting workstation (e.g. 44); and
if the permission status of the requested one or more scene databases is locked and the requested permission level is read only, sending the one or more scene database files of the requested one or more scene databases to the requesting workstation (e.g. 44).

37. The method of claim 36 wherein the step of arbitrating further comprises the step of sending a not available message to the requesting workstation (e.g. 44) if the requested permission level is read-write and the permission status of the requested one or more scene databases is locked.

38. The method of claim 36 or 37 wherein the step of arbitrating further comprises the steps of:
determining whether a user of the requesting workstation (e.g. 44) has limited read-write status;
if no and the permission status of the requested one or more scene databases is locked, sending a not available message to the requesting workstation (e.g. 44);
if yes and the request for the one or more scene databases includes a request for portions of the one or more scene database files of the one or more scene databases already accessed by other users having limited read-write status, sending a not available message to the requesting workstation (e.g. 44); and
if yes and the request for the one or more scene databases includes a request for portions of the one or more scene database files of the requested one or more scene databases not already accessed by other users having limited read-write status, sending the requested portions of the one or more scene databases to the requesting workstation (e.g. 44).

39. The method of claim 32 or 38 further comprising the step of providing a production management database maintained by a database management system (20) of the logistics system (23), the production management database comprising a plurality of entries each corresponding to at least one of the one or more scenes of the production, each of the plurality of entries containing data denoting production status of the one of the one or more scenes to which the entry corresponds.

40. The method of claim 39 wherein the permission status for one or more scene databases is maintained in the production management database.

41. The method of claim 38, 39 or 40 further comprising the step of generating a production management report for at least one of the one or more scenes using the data stored in the production management database.

42. The method of claim 37 wherein the step of releasing the accessed one or more scene databases further comprises the steps of:
storing enhanced versions of the accessed image files and the received scene database files of the accessed scene database to be released in place of previously existing versions of the accessed image files and received scene database files when the permission status of the accessed scene database to be released is read-write or limited read-write; and
deleting the enhanced versions of the accessed image files and the scene database files of the accessed scene database to be released when the permission status of the accessed scene database to be released is read-only.

43. The method of claim 31 wherein the step of accessing one or more of the scene databases further comprises the step of selecting the scene databases to be accessed in accordance with a worklist.

44. The method of claim 31 wherein the step of accessing one or more of the scene databases further comprises the step of selecting the scene databases to be accessed using data stored in a work selection database maintained by a database management system (20) of the logistics system (23).

45. The method of claim 31 wherein the step of accessing one or more of the scene databases further comprises the step of selecting the scene databases to be accessed on a non-system basis.

46. The method of claim 31 wherein the one or more scene database files of the one or more scene databases further comprise exposure sheets.

47. The method of any of the foregoing claims further comprising the steps of:
creating the one or more image files by digitally scanning artwork representing one or more of the images represented by the digital image data; and
storing the one or more image files in the temporary storage devices (28, 30, 32, 34, 35).

## Patentansprüche

1. Rechnergestütztes Bilderzeugungssystem, das es Benutzern ermöglicht, effizient auf digitale Bilddaten zuzugreifen, diese anzuzeigen, zu überprüfen, zu entwickeln und zu verbessern, wobei die Bilddaten über eine Anzahl von Datenverarbeitungseinrichtungen (44, 46, ..., 74, 77) als eine oder mehrere Bilddateien organisiert sind, wobei das System ein Logistiksystem (23) zum Speichern der einen oder mehreren Bilddateien und zum Verwalten von Steuerdaten aufweist, die mit jeder der einen oder mehreren Bilddateien in Beziehung stehen, wobei die Anzahl von Datenverarbeitungseinrichtungen (44, 46, ..., 74, 77) Zugriff auf die in dem Logistiksystem (23) gespeicherten Steuerdaten haben, und zwar über ein erstes Netzwerk (4), durch das jede der Anzahl von Datenverarbeitungseinrichtungen (44, 46, ..., 74, 77) mit dem Logistiksystem (23) gekoppelt ist, wobei die Anzahl von Datenverarbeitungseinrichtungen (44, 46, ..., 74, 77) über ein zweites Netzwerk (6, 8, 10, 12, 14) Zugriff auf die Bilddateien hat, **dadurch gekennzeichnet,** daß:
das zweite Netzwerk (6, 8, 10, 12, 14) eine Anzahl von unabhängigen Hochgeschwindigkeitsdatenbussen aufweist, von denen jeder das Logistiksystem (23) mit einer Steuereinrichtung (36, 38, 40, 42, 43) koppelt, wobei die Steuereinrichtung (36, 38, 40, 42, 43) die Übertragung der einen oder mehreren Bilddateien zwischen dem Logistiksystem (23) und einer damit gekoppelten Zwischenspeichereinrichtung (28, 30, 32, 34, 35) steuert, wobei die Steuereinrichtung außerdem den Zugriff auf die übertragene eine oder mehreren Bilddateien steuert, die in der Zwischenspeichereinrichtung (28, 30, 32, 34, 35) und einer Untergruppe (z.B. 44, 46, 48, 50) der Anzahl von Datenverarbeitungseinrichtungen (44, 46, ..., 74, 77) gespeichert sind, die über die Steuereinrichtung (36, 38, 40, 42, 43) direkt mit der Zwischenspeichereinrichtung (28, 30, 32, 34, 35) gekoppelt sind.

2. Vorrichtung nach Anspruch 1, bei der die Zwischenspeichereinrichtung (28, 30, 32, 34, 35) ein Festplatten-Cluster ist, der eine Anzahl von Festplattenlaufwerken enthält.

3. Vorrichtung nach Anspruch 2, bei der die Steuereinrichtung eine Parallel-Festplattensteuerung enthält, die parallel auf mehr als eines der Anzahl von Festplattenlaufwerken der Zwischenspeichereinrichtung zugreifen kann.

4. Vorrichtung nach Anspruch 1, bei der das Logistiksystem (23) außerdem eine Archivspeichereinrichtung (17, 19) enthält, um die eine oder mehreren Bilddateien und/oder die Steuerdaten für lange Zeitperioden zu speichern.

5. Vorrichtung nach Anspruch 2, bei der die Archivspeichereinrichtung (17, 19) eine oder mehrere Bildplatteneinrichtungen ist, um die eine oder mehreren Bilddateien und/oder die Steuerdaten zu speichern.

6. Vorrichtung nach Anspruch 2, bei der die Archivspeichereinrichtung (17, 19) ein oder mehrere Bandlaufwerksysteme mit hoher Kapazität ist, um die eine oder mehreren Bilddateien und/oder die Steuerdaten zu speichern.

7. Vorrichtung nach Anspruch 2, bei der die Steuerinformationen Archivdateipositionsinformationen für Bilddateien enthalten, die in der Archivspeichereinrichtung (17, 19) gespeichert sind, und bei der das Logistiksystem (23) außerdem Produktionsverwaltungsdatenbankeinrichtungen (20) aufweist, um die Archivdateipositionsinformationen als eine Archivdatenbank zu verwalten.

8. Vorrichtung nach Anspruch 5, bei der die Archivdatenbank eine relationale Datenbank ist, um die Archivdateipositionsinformationen mit den in der Archivspeichereinrichtung (17, 19) gespeicherten Bilddateien zu verknüpfen.

9. Vorrichtung nach Anspruch 1, bei der jede der Anzahl von Datenverarbeitungseinrichtungen (44, 46, ..., 74, 77) ein rechnergestützter Benutzerarbeitsplatz ist, um es zumindest einem Benutzer zu ermöglichen, die eine oder mehreren Bilddateien und/oder die mit der einen oder mehreren Bilddateien verknüpften Steuerinformationen zu entwickeln, zu verwenden und zu verbessern.

10. Vorrichtung nach Anspruch 1 oder 8, bei der die Steuerinformationen Produktiosinformationen enthalten, die benötigt werden, um Produktionsverwaltungsberichte zu erzeugen, und bei der das Logistiksystem (23) außerdem Verwaltungsdatenbankeinrichtungen (20) aufweist, um die Produktionsinformationen mit der einen oder mehreren Bilddateien als eine Produktionsverwaltungsdatenbank zu verknüpfen.

11. Vorrichtung nach Anspruch 10, bei der die Produktionsverwaltungsdatenbank eine relationale Datenbank ist, um die Produktionsinformationen mit der einen oder mehreren Bilddateien zu verknüpfen.

12. Vorrichtung nach Anspruch 1 oder 11, bei der die Steuerinformationen Dateipositionsinformationen für jede der in einer oder mehreren der Zwischenspeichereinrichtungen (28, 30, 32, 34, 35) gespeicherten Bilddateien enthalten und bei der das Logistiksystem (23) außerdem Verwaltungsdatenbankeinrichtungen enthält, um die Dateipositionsinformationen als eine Dateisuchdatenbank zu verwalten.

13. Vorrichtung nach Anspruch 12, bei der die Dateisuchdatenbank eine relationale Datenbank ist, um die Dateipositionsinformationen mit jeder der einen oder mehreren Bilddateien zu verknüpfen, die in den Zwischenspeichereinrichtungen (28, 30, 32, 34, 35) gespeichert sind.

14. Vorrichtung nach Anspruch 1, 11 oder 13, bei der die Steuerinformationen Produktionsarbeitsflußinformationen für die eine oder mehreren Bilddateien und/oder die Steuerinformationen enthalten und bei der das Logistiksystem (23) außerdem Datenbankverwaltungseinrichtungen (20) enthält, um die Produktionsarbeitsflußinformationen als eine Arbeitslistendatenbank zu verwalten.

15. Vorrichtung nach Anspruch 14, bei der die Arbeitslistendatenbank eine relationale Datenbank ist, um die Produktionsarbeitsflußinformationen mit der einen oder mehreren Bilddateien und/oder den Steuerinformationen zu verknüpfen.

16. Vorrichtung nach Anspruch 14 oder 15, bei der das Logistiksystem (23) über den Zugriff auf jede der einen oder der mehreren Bilddateien und deren damit verknüpften Produktionsarbeitsflußinformationen entscheidet.

17. Vorrichtung nach Anspruch 16, bei der es die Entscheidung, die durch das Logistiksystem (23) durchgeführt wird, lediglich einer der einen oder mehreren Datenverarbeitungseinrichtungen (44, 46, ..., 74, 77) ermöglicht, zu irgendeinem Zeitpunkt eine der einen oder mehreren Bilddateien und deren damit verknüpften Produktionsarbeitsflußinformationen zu aktualisieren.

18. Vorrichtung nach Anspruch 16 oder 17, bei der es die Entscheidung, die durch das Logistiksystem (23) durchgeführt wird, einer oder mehreren der Anzahl von Datenverarbeitungseinrichtungen (44, 46, ..., 74, 77) ermöglicht, lediglich für Lese-Zwecke eine Kopie von einer der einen oder mehreren Bilddateien zu erhalten.

19. Vorrichtung nach Anspruch 16, 17 oder 18, bei der es die Entscheidung, die durch das Lgistiksystem (23) durchgeführt wird, einer der einen oder mehreren Datenverarbeitungseinrichtungen (44, 46, ..., 74, 77) ermöglicht, einen zugewiesenen Bereich von einer der einen oder mehreren Bilddateien und einen zugehörigen Bereich von deren damit verknüpften Produktionsarbeitsflußinformationen zu aktualisieren.

20. Verfahren zur effizienten Verarbeitung digitaler Bilddaten, die als eine oder mehrere Bilddateien organisiert sind, unter Verwendung eines rechnergestützten Bilderzeugungssystems, wobei das Erzeugungssystem ein Logistiksystem (23) zum Speichern und zum Entscheiden über den Zugriff auf eine oder mehrere Bilddateien und zum Verwalten und zum Koordinieren des Zugriffs auf Steuerinformationen hat, die mit jeder der einen oder mehreren Bilddateien verknüpft sind, und einer Anzahl von Arbeitsstationen (44, 46, ..., 74, 77), um auf Bilder, die durch eine oder mehrere Bilddateien dargestellt sind, zuzugreifen, diese anzuzeigen und zu verbessern, wobei das Logistiksystem (23) über ein erstes Netzwerk (4) mit den Arbeitsstationen (44, 46, ..., 74, 77) gekoppelt ist, um die Steuerinformationen zwischen dem Logistiksystem (23) und der einen oder mehreren Arbeitsstationen (44, 46, ..., 74, 77) zu übertragen, und wobei das Logistiksystem (23) über ein zweites Netzwerk (6, 8, 10, 12, 14) mit den Arbeitsstationen (44, 46, ..., 74, 77) verbunden ist, um die eine oder mehreren Bilddateien zwischen den Arbeitsstationen (44, 46, ..., 74, 77) und dem Logistiksystem zu übertragen, **dadurch gekennzeichnet,** daß:
das zweite Netzwerk eine Anzahl von Hochgeschwindigkeitsdatenbussen (6, 8, 10, 12, 14) aufweist, von denen jeder das Logistiksystem (23) mit einer Steuereinrichtung (36, 38, 40, 42, 43) koppelt, um die Übertragung von Bilddateien zwischen dem Logistiksystem und einer damit gekoppelten Zwischenspeichereinrichtung (28, 30, 32, 34, 35) zu steuern, und um den Zugriff auf die übertragenen Bilddateien zu steuern, die in der Zwischenspeichereinrichtung (28, 30, 32, 34, 35) und einer Untergruppe der Anzahl von Arbeitsstationen (z.B. 46-50) gespechert sind, die direkt über die Steuereinrichtung (z.B. 36) mit der Zwischenspeichereinrichtung (z.B. 28) gekoppelt sind, wobei das Verfahren folgende Schritte umfaßt:
Senden einer ersten Anforderung für zumindest eine der einen oder mehreren Bilddateien von einer anfordernden Arbeitsstation (z.B. 44) der Anzahl von Arbeitsstationen (44, 46, ..., 74, 77) an die Zwischenspeichereinrichtung (z.B. 28), die direkt mit der anfordernden Arbeitsstation (z.B. 44) gekoppelt ist;
Übertragen der angeforderten, zumindest einen Bilddatei von der direkt angeschlossenen Zwischenspeichereinrichtung (z.B. 28) zu der anfordernden Arbeitsstation (z.B. 44), wenn die angeforderte, zumindest eine Bilddatei in der direkt angeschlossenen Zwischenspeichereinrichtung (z.B. 28) gespeichert ist;
wenn nicht: Senden einer zweiten Anforderung für die angeforderte, zumindest eine Bilddatei von der anfordernden Arbeitsstation (z.B. 44) zu dem Logistiksystem (23) über das erste Netzwerk (4);
Bestimmen, wo sich die angeforderte, zumindest eine Bilddatei in dem Erzeugungssystem befindet;
wenn sich die angeforderte, zumindest eine Bilddatei in einer der einen oder mehreren Zwischenspeichereinrichtungen (z.B. 30, 32, 34, 35) befindet, die nicht direkt mit der anfordernden Arbeitsstation (z.B. 44) gekoppelt sind:
Übertragen der angeforderten, zumindest einen Bilddatei von ihrer momentanen Position in einer der nicht direkt angeschlossenen Zwischenspeichereinrichtungen (z.B. 30, 32, 34, 35) über das zweite Netzwerk (6, 8, 10, 12, 14) zu der direkt angeschlossenen Zwischenspeichereinrichtung (z.B. 28); und
Zuführen der angeforderten, zumindest einen Bilddatei zu der anfordernden Arbeitsstation (z.B. 44).

21. Verfahren nach Anspruch 20, bei dem der Schritt des Bestimmens der Position der angeforderten, zumindest einen Bilddatei in dem Erzeugungssystem durchgeführt wird, indem auf die durch das Logistiksystem (23) verwalteten Steuerinformationen Bezug genommen wird.

22. Verfahren nach Anspruch 20, das außerdem die Schritte umfaßt:
Vorsehen einer Dateisuchdatenbank, die durch ein Datenbankverwaltungssystem (20) des Logistiksystems (23) verwaltet wird;
Verwalten der Einträge in der Dateisuchdatenbank für jede der einen oder mehreren Bilddateien, die in der einen oder mehreren Zwischenspeichereinrichtungen (28, 30, 32, 34, 35) gespeichert sind, wobei jede der Eintragungen die Position der mit dem Eintrag in Beziehung stehenden Bilddatei spezifiziert; und
bei dem der Schritt des Bestimmens der Position der angeforderten, zumindest einen Bilddatei weiterhin den Schritt umfaßt: Bestimmen, ob die angeforderte, zumindest eine Bilddatei in irgendeiner der nicht angeschlossenen Zwischenspeichereinrichtungen (z.B. 30, 32, 34, 35) enthalten ist, indem die Dateisuchdatenbank nach einem der Einträge durchsucht wird, die mit der angeforderten, zumindest einen Bilddatei in Beziehung stehen.

23. Verfahren nach Anspruch 22, bei dem der Schritt des Bestimmens, wo sich die angeforderte, zumindest eine Bilddatei in dem Erzeugungssystem befindet, außerdem die Schritte umfaßt:
Bestimmen, ob die angeforderte, zumindest eine Bilddatei in einer der nicht direkt angeschlossenen Zwischenspeichereinrichtungen (z.B. 30, 32, 34, 35) enthalten ist, wenn keiner der Einträge in der Dateisuchdatenbank mit der angeforderten, zumindest einen Bilddatei in Beziehung steht, indem jede der nicht direkt angeschlossenen Zwischenspeichereinrichtungen (z.B. 30, 32, 34, 35) nach der angeforderten, zumindest einen Bilddatei durchsucht wird;
wenn die angeforderte, zumindest eine Bilddatei gefunden wurde:
Übertragen der angeforderten, zumindest einen Bilddatei von ihrer momentanen Position in eine der nicht direkt angeschlossenen Zwischenspeichereinrichtungen (z.B. 30, 32, 34, 35) über das zweite Netzwerk (z.B. 8, 10, 12, 14) zu der direkt angeschlossenen Zwischenspeichereinrichtung (z.B. 28);
Zuführen der angeforderten, zumindest einen Bilddatei zu der anfordernden Arbeitsstation (z.B. 44); und
Erzeugen eines mit der angeforderten, zumindest einen Bilddatei in Beziehung stehenden Eintrags in der Dateisuchdatenbank, der deren Position in der direkt angeschlossenen Zwischenspeichereinrichtung (z.B. 28) spezifiziert.

24. Verfahren nach Anspruch 23, bei dem das Logistiksystem (23) eine Archivspeichereinrichtung (17, 19) zum Speichern der Bilddateien und deren damit verknüpften Steuerinformationen für lange Zeitperioden enthält, und bei dem der Schritt des Bestimmens der Position der angeforderten, zumindest einen Bilddatei außerdem die Schritte umfaßt:
Bestimmen, ob sich die angeforderte, zumindest eine Bilddatei in der Archivspeichereinrichtung (17, 19) befindet, wenn die angeforderte, zumindest eine Bilddatei nicht in den Zwischenspeichereinrichtungen (28, 30, 32, 34, 35) gefunden wird; und
wenn ja:
Zugreifen auf die angeforderte, zumindest eine Bilddatei durch die Archivspeichereinrichtung (17, 19);
Übertragen der angeforderten, zumindest einen Bilddatei über das zweite Netzwerk (z.B. 6) von dem Logistiksystem (23) zu der direkt angeschlossenen Zwischenspeichereinrichtung (z.B. 28); und
Zuführen der angeforderten, zumindest einen Bilddatei zu der anfordernden Arbeitsstation (z.B. 44).

25. Verfahren nach Anspruch 24, das weiterhin die Schritte umfaßt:
Vorsehen einer Archivdatenbank, die durch ein Datenbankverwaltungssystem (20) des Logistiksystems (23) verwaltet wird;
Verwalten der Einträge in der Archivdatenbank für jede der in der Archivspeichereinrichtung (17, 19) des Logistiksystems (23) gespeicherten Bilddateien, wobei jeder der Einträge in der Archivdatenbank die Position der mit dem Eintrag in Beziehung stehenden Bilddatei spezifiziert; und
wobei der Schritt des Bestimmens, ob die angeforderte, zumindest eine Bilddatei in der Archivspeichereinrichtung (17, 19) enthalten ist, weiterhin den Schritt umfaßt: Durchsuchen der Archivdatenbank nach einem der Einträge, die mit der angeforderten, zumindest einen Bilddatei in Beziehung stehen.

26. Verfahren nach Anspruch 20, 23 oder 24, bei dem der Schritt des Zuführens der angeforderten, zumindest einen Bilddatei zu der anfordernden Arbeitsstation (z.B. 44) außerdem den Schritt umfaßt: Übertragen einer Kopie der angeforderten, zumindest einen Bilddatei von der direkt angeschlossenen Zwischenspeichereinrichtung (z.B. 28) zu der anfordernden Arbeitsstation (z.B. 44).

27. Verfahren nach Anspruch 22, bei dem der Schritt des Bestimmens, ob die angeforderte, zumindest eine Bilddatei in einer der nicht angeschlossenen Zwischenspeichereinrichtungen (z.B. 30, 32, 34, 35) enthalten ist, weiterhin den Schritt umfaßt: Überprüfen, ob die angeforderte, zumindest eine Datei an der Position gespeichert ist, die durch den Eintrag spezifiziert ist, der mit der angeforderten, zumindest einen Bilddatei in Beziehung steht.

28. Verfahren nach Anspruch 27, bei dem der Schritt des Überprüfens weiterhin die Schritte umfaßt:
Übertragen der angeforderten, zumindest einen Bilddatei von der spezifizierten Position zur direkt angeschlossenen Zwischenspeichereinrichtung (z.B. 28) über das Logistiksystem (23), wenn die angeforderte, zumindest eine Bilddatei an der spezifizierten Position gespeichert ist;
Durchsuchen von jeder der nicht direkt angeschlossenen Zwischenspeichereinrichtungen (z.B. 30, 32, 34, 35) nach der angeforderten, zumindest einen Bilddatei, wenn die angeforderte, zumindest eine Bilddatei nicht an der spezifizierten Position gespeichert ist.

29. Verfahren nach Anspruch 28, bei dem der Schritt des Durchsuchens von jeder der nicht direkt angeschlossenen Zwischenspeichereinrichtungen (z.B. 30, 32, 34, 35) weiterhin die Schritte umfaßt:
Übertragen der angeforderten, zumindest einen Bilddatei zu der direkt angeschlossenen Zwischenspeichereinrichtung (z.B. 28), wenn die angeforderte, zumindest eine Bilddatei nicht gefunden wurde; und
Senden einer Nicht-Gefunden-Nachricht an die anfordernde Arbeitsstation (z.B. 44), wenn die angeforderte, zumindest eine Bilddatei nicht gefunden wurde.

30. Verfahren nach einem der Ansprüche 20, 23, 24, 26, 28 oder 29, bei dem die Übertragung der angeforderten, zumindest einen Bilddatei von der nicht direkt angeschlossenen Zwischenspeichereinrichtung (z.B. 30, 32, 34, 35) zu der direkt angeschlossenen Speichereinrichtung (z.B. 28) über das Logistiksystem (23) erfolgt.

31. Verfahren nach einem der Ansprüche 23, 24, 26, 28 oder 29, bei dem der Schritt des Übertragens der angeforderten, zumindest einen Bilddatei von der nicht direkt angeschlossenen Zwischenspeichereinrichtung (z.B. 30, 32, 34, 35) zu der direkt angeschlossenen Zwischenspeichereinrichtung (z.B. 28) weiterhin den Schritt umfaßt: Aktualisieren der Dateisuchdatenbank, um zu spezifizieren, wo die angeforderte, zumindest eine Bilddatei nach der Übertragung in der direkt angeschlossenen Zwischenspeichereinrichtung (z.B. 28) gespeichert ist.

32. Verfahren nach einem der vorhergehenden Ansprüche, bei dem die Bilddateien eine oder mehrere Zellen darstellen, die Zellen einen oder mehrere Rahmen enthalten, die Rahmen eine oder mehrere Szenen enthalten, die Szenen als eine Produktion gemäß eines Skriptes organisiert sind, wobei Organisation und Inhalt von jeder der Szenen durch einen Szenenplan gemäß des Skriptes bestimmt sind, und wobei das Verfahren weiterhin die Schritte umfaßt:
Vorsehen einer Szenendatenbank, die durch ein Datenbankverwaltungssystem (20) des Logistiksystems (23) verwaltet wird; und
Erzeugen von einer oder mehreren Szenendatenbankdateien in der Szenendatenbank für jede der Szenen der Produktion, wobei jede der einen oder mehreren Szenendatenbankdateien Daten enthält, die Inhalt und Organisation für jede der Szenen gemäß des Szenenplans für jede der Szenen bestimmt, wobei die Daten, durch die Inhalt und Organisation bestimmt sind, Daten enthalten, durch die die Bilddateien identifiziert werden, die die Bilder darstellen, die jede der einen oder mehreren Szenen enthalten.

33. Verfahren nach Anspruch 32, das weiterhin die Schritte umfaßt:
Übertragen einer Anforderung für den Zugriff auf eine oder mehrere der Szenendatenbanken von der anfordernden Arbeitsstation (z.B. 44) über das erste Netzwerk (4) zu dem Logistiksystem (23);
Empfangen von zumindest einer der einen oder mehreren Szenendatenbankdateien der angeforderten einen oder mehreren Szenendatenbanken an der anfordernden Arbeitsstation (z.B. 44); und
bei dem die angeforderte, zumindest eine Bilddatei durch die zumindest eine empfangene Szenendatenbankdatei identifiziert wird.

34. Verfahren nach Anspruch 33, das weiterhin die Schritte umfaßt:
Freigeben der angeforderten, zumindest einen Bilddatei; und
Freigeben der einen oder mehreren Szenendatenbanken, auf die zugegriffen wurde, wenn sie nicht länger benötigt werden.

35. Verfahren nach Anspruch 32, das weiterhin den Schritt umfaßt: Entscheiden über den Zugriff auf die angeforderte eine oder mehrere der Szenendatenbanken, wobei der Schritt des Entscheidens außerdem die Schritte umfaßt:
Anfordern eines Berechtigungswertes für die angeforderte eine oder mehreren Szenendatenbanken auf Grundlage von Operationen, die mit der angeforderten, zumindest einen Bilddatei durchgeführt werden, die durch die eine oder mehreren der Szenendatenbankdateien der angeforderten einen oder mehreren Szenendatenbanken identifiziert wurden; und
Senden des angeforderten Berechtigungswertes zusammen mit der Anforderung für die eine oder mehreren Szenendatenbanken.

36. Verfahren nach Anspruch 35, bei dem der Schritt des Entscheidens außerdem die Schritte umfaßt:
Bestimmen in dem Logistiksystem (23), ob jede der angeforderten einen oder mehreren Szenendatenbanken einen Berechtigungsstatus von ungesperrt oder gesperrt enthält;
Senden der einen oder mehreren der Szenendatenbankdateien der angeforderten einen oder mehreren Szenendatenbanken zu der anfordernden Arbeitsstation (z.B. 44), wenn der Berechtigungsstatus der angeforderten einen oder mehreren Szenendatenbanken nicht gesperrt ist; und
Senden der einen oder mehreren Szenendatenbankdateien der angeforderten einen oder mehreren Szenendatenbanken zu der anfordernden Arbeitsstation (z.B. 44), wenn der Berechtigungisstatus der angeforderten einen oder mehreren Szenendatenbanken gesperrt und der angeforderte Berechtigungswert Nur-Lesen ist.

37. Verfahren nach Anspruch 36, bei dem der Schritt des Entscheidens außerdem den Schritt umfaßt: Senden einer nicht verfügbaren Nachricht zu der anfordernden Arbeitsstation (z.B. 44), wenn der angeforderte Berechtigungswert Lesen-Schreiben und der Berechtigungsstatus der angeforderten einen oder mehreren Szenendatenbanken gesperrt ist.

38. Verfahren nach Anspruch 36 oder 37, bei dem der Schritt des Entscheidens weiterhin die Schritte umfaßt:
Bestimmen, ob ein Benutzer der anfordernden Arbeitsstation (z.B. 44) einen beschränkten Leser-Schreib-Status hat;
wenn nicht, und wenn der Berechtigungsstatus der angeforderten einen oder mehreren Szenendatenbanken gesperrt ist, Senden einer Nicht-Verfügbar-Nachricht an die anfordernde Arbeitsstation (z.B. 44);
wenn ja, und wenn die Anforderung für die eine oder mehreren Szenendatenbanken eine Anforderung für Bereiche der einen oder mehreren Szenendatenbankdateien von der einen oder mehreren Szenendatenbanken enthält, auf die bereits durch andere Benutzer mit einem beschränkten Lese-Schreib-Status zugegriffen wird, Aussenden einer Nicht-Verfügbar-Nachricht an die anfordernde Arbeitsstation (z.B. 44); und
wenn ja, und wenn die Anforderung für die eine oder mehreren Szenendatenbanken eine Anforderung für Bereiche der einen oder mehreren Szenendatenbankdateien der angeforderten einen oder mehreren Szenendatenbanken enthält, auf die nicht bereits durch andere Benutzer mit einem beschränkten Lese-Schreib-Status zugegriffen wird, Senden der angeforderten Bereiche von der einen oder mehreren Szenendatenbanken an die anfordernde Arbeitsstation (z.B. 44).

39. Verfahren nach Anspruch 32 oder 38, das weiterhin den Schritt umfaßt: Vorsehen einer Produktionsverwaltungsdatenbank, die durch ein Datenbankverwaltungssystem (20) des Logistiksystems (23) verwaltet wird, wobei die Produktionsverwaltungsdatenbank eine Anzahl von Einträgen enthält, die jeweils zumindest einer der einen oder mehreren Szenen der Produktion entsprechen, wobei jeder der Anzahl von Einträgen Daten enthält, die den Produktionsstatus von der einen der einen oder mehreren Szenen angibt, denen der Eintrag entspricht.

40. Verfahren nach Anspruch 39, bei dem der Berechtigungsstatus für eine oder mehrere Szenendatenbanken in der Produktionsverwaltungsdatenbank verwaltet wird.

41. Verfahren nach Anspruch 38, 39 oder 40, das weiterhin den Schritt umfaßt: Erstellen eines Produktionsverwaltungsberichts für zumindest eine der einen oder mehreren Szenen, unter Verwendung der Daten, die in der Produktionsverwaltungsdatenbank gespeichert sind.

42. Verfahren nach Anspruch 37, bei dem der Schritt des Freigebens der einen oder mehreren zugegriffenen Szenendatenbanken weiterhin die Schritte umfaßt:
Speichern verbesserter Versionen von den zugegriffenen Bilddateien und der empfangenen Szenendatenbankdateien der zugegriffenen Szenendatenbank, die anstelle der zuvor existierenden Versionen der zugegriffenen Bilddateien und empfangenen Szenendatenbankdateien freigegeben werden, wenn der Berechtigungsstatus der zugegriffenen Szenendatenbank, die freigegeben werden soll, Lesen-Schreiben oder beschränkt Lesen-Schreiben ist; und
Löschen der verbesserten Versionen der zugegriffenen Bilddateien und der Szenendatenbankdateien der zugegriffenen Szenendatenbank, die freigegeben werden soll, wenn der Berechtigungsstatus der zugegriffenen Szenendatenbank, die freigegeben werden soll, lediglich Lesen ist.

43. Verfahren nach Anspruch 31, bei dem der Schritt des Zugreifens auf eine oder mehrere der Szenendatenbanken weiterhin den Schritt umfaßt: Auswählen der Szenendatenbanken, auf die gemäß einer Arbeitsliste zugegriffen werden soll.

44. Verfahren nach Anspruch 31, bei dem der Schritt des Zugreifens auf eine oder mehrere der Szenendatenbanken weiterhin den Schritt umfaßt: Auswählen der Szenendatenbanken, auf die zugegriffen werden soll, unter Verwendung von Daten, die in einer Arbeitsauswahldatenbank gespeichert sind, die durch ein Datenbankverwaltungssystem (20) des Logistiksystems (23) verwaltet wird.

45. Verfahren nach Anspruch 31, bei dem der Schritt des Zugreifens auf eine oder mehrere der Szenendatenbanken weiterhin den Schritt umfaßt: Auswählen der Szenendatenbanken, auf die auf einer Nicht-System-Basis zugegriffen werden soll.

46. Verfahren nach Anspruch 31, bei dem die eine oder mehreren Szenendatenbankdateien der einen oder mehreren Szenendatenbanken außerdem Belichtungsbögen (exposure sheets) haben.

47. Verfahren nach einem der vorhergehenden Ansprüche, das weiterhin die Schritte umfaßt:
Erzeugen der einen oder mehreren Bilddateien durch digitales Abtasten von Druckvorlagen, die ein oder mehrere der Bilder darstellen, die durch digitale Bilddaten dargestellt sind; und
Speichern der einen oder mehreren Bilddateien in den Zwischenspeichereinrichtungen (28, 30, 32, 34, 35).

## Revendications

1. Système de production d'images par ordinateur permettant à des utilisateurs d'accéder efficacement à des données d'image numériques et d'afficher, d'examiner, de développer et d'améliorer efficacement de telles données organisées sous la forme d'un fichier ou d'une pluralité de fichiers d'images, par l'intermédiaire d'une pluralité de dispositifs (44,46,...,74,77) de traitement d'informations, le système possédant un système logistique (23) pour mémoriser le ou la pluralité de fichiers d'images et maintenir des données de commande concernant le ou chacun des fichiers d'images, la pluralité de dispositifs de traitement d'informations (44,46,...,74, 77) ayant accès à des données de commande mémorisées dans le système logistique (23) par l'intermédiaire d'un premier réseau (4) couplant chaque dispositif de la pluralité de dispositifs de traitement d'informations (44,46,...,74,77) au système logistique (23), la pluralité de dispositifs de traitement d'informations (44,46,...,74,77) ayant accès aux fichiers d'images par l'intermédiaire d'un second réseau (6,8,10,12,14), caractérisé en ce que :
le second réseau (6,8,10,12,14) comprend une pluralité de bus indépendants de transmission de données à grande vitesse, dont chacun couple le système logistique (23) à des moyens formant contrôleur (36,38,40,42,43), les moyens formant contrôleur (36,38,40,42,43) servant à commander le transfert du fichier d'images ou de la pluralité de fichiers d'images entre le système logistique (23) et un dispositif de mémoire temporaire (28,30,32, 34,35) couplé à ce système, les moyens formant contrôleur servant également à commander l'accès au fichier d'images transféré ou à la pluralité de fichiers d'images transférés, mémorisés dans le dispositif de mémoire temporaire (28,30,32,34,35) parmi un sous-ensemble (par exemple 44,46,48,50) de la pluralité de dispositifs de traitement d'informations (44,46,...,74,77) couplés directement au dispositif de mémoire temporaire (38,30,32, 34,35) par l'intermédiaire des moyens formant contrôleur (36,38,40,42,43).

2. Dispositif selon la revendication 1, dans lequel le dispositif de mémoire temporaire (28,30,32,34,35) est un groupe de disques comprenant une pluralité d'unités de disques.

3. Dispositif selon la revendication 2, dans lequel les moyens formant contrôleur comprennent un contrôleur de disques parallèle apte à accéder en parallèle à plus d'une unité de disques parmi la pluralité d'unités de disques du dispositif de mémoire temporaire.

4. Dispositif selon la revendication 1, dans lequel le système logistique (23) comprend en outre des moyens formant mémoire d'archivage (17,19) servant à mémoriser le fichier d'images ou la pluralité de fichiers d'images et/ou les données de commande pendant de longs intervalles de temps.

5. Dispositif selon la revendication 2, dans lequel les moyens formant mémoire d'archivage (17,19) sont constitués par une ou plusieurs configurations de disques optiques pour mémoriser le fichier d'images ou la pluralité de fichiers d'images et/ou les données de commande.

6. Dispositif selon la revendication 2, dans lequel les moyens formant mémoire d'archivage (17,19) sont constitués par un ou plusieurs systèmes d'entraînement de bande de grande capacité pour mémoriser le fichier d'images ou la pluralité de fichiers d'images et/ou les données de commande.

7. Dispositif selon la revendication 2, dans lequel l'information de commande comprend une information d'emplacement de fichiers d'archivage pour des fichiers d'images mémorisés dans les moyens formant mémoire d'archivage (17,19), et dans lequel le système logistique (23) comprend en outre des moyens (20) formant base de données de gestion de production pour maintenir l'information d'emplacements de fichiers d'archivage en tant que base de données d'archivage.

8. Dispositif selon la revendication 5, dans lequel la base de données d'archivage est une base de données relationnelle pour associer l'information d'emplacements de fichiers d'archivage aux fichiers d'images mémorisés dans les moyens formant mémoire d'archivage (17,19).

9. Dispositif selon la revendication 1, dans lequel chaque dispositif parmi la pluralité de dispositifs de traitement d'informations (44,46,...,74,77) est un poste de travail informatisé d'utilisateur permettant au moins à un utilisateur de développer, d'utiliser et d'améliorer le fichier d'images ou la pluralité de fichiers d'images et/ou l'information de commande associée au fichier d'images ou à la pluralité de fichiers d'images.

10. Dispositif selon la revendication 1 ou 2, dans lequel l'information de commande inclut une information de production nécessaire pour produire des rapports de gestion de production, et dans lequel le système logistique (23) comporte en outre des moyens formant base de données de gestion (20) pour associer l'information de production à un ou plusieurs fichiers d'images en tant que base de données de gestion de production.

11. Dispositif selon la revendication 10, dans lequel la donnée de base de gestion de production est une donnée de base relationnelle pour associer l'information de production au fichier d'images ou à la pluralité de fichiers d'images.

12. Dispositif selon la revendication 1 ou 11, dans lequel l'information de commande comprend une information d'emplacements de fichiers pour chacun des fichiers d'images mémorisés dans un ou plusieurs des dispositifs de mémoire temporaire (28,30,32,34,35) et dans lequel le système logistique (23) comporte en outre des moyens (20) formant base de données de gestion pour maintenir l'information d'emplacement de fichier en tant que base de données de suivi de fichier.

13. Dispositif selon la revendication 12, dans lequel la base de données de suivi de fichier est une base de données relationnelle pour associer une information d'emplacement de fichier au fichier d'images ou à chacun de la pluralité de fichiers d'images mémorisés dans les dispositifs de mémoire temporaire (28,30,32,34,35).

14. Dispositif selon la revendication 1, 11 ou 13, dans lequel l'information de commande inclut une information de flux de travail de production pour le fichier d'images ou la pluralité de fichiers d'images et/ou l'information de commande, et dans lequel le système logistique (23) comprend en outre des moyens (20) de gestion de la base de données pour maintenir l'information de flux de travail de production en tant que base de données de liste de travail.

15. Dispositif selon la revendication 14, dans lequel la base de données de la liste de travail est une base de données relationnelle pour associer l'information de flux de travail de production au fichier d'images ou à la pluralité de fichiers d'images et/ou à l'information de commande.

16. Dispositif selon la revendication 14 ou 15, dans lequel le système logistique (23) réalise un arbitrage de l'accès au fichier d'images ou à chacun de la pluralité de fichiers d'images et à l'information de flux de travail de production qui leur est associée.

17. Dispositif selon la revendication 16, dans lequel l'arbitrage exécuté par le système logistique (23) permet seulement au dispositif de traitement d'informations ou à seulement l'un de la pluralité de dispositifs de traitement d'informations (44,46,...,74,77) de mettre à jour le fichier d'images ou l'un de la pluralité de fichiers d'images et l'information de flux de travail de production, qui lui est associée, à un instant quelconque.

18. Dispositif selon la revendication 16 ou 17, dans lequel l'arbitrage exécuté par le système logique (23) permet à un ou plusieurs dispositifs de la pluralité de dispositifs de traitement d'informations (44,46,...,74,77) d'obtenir une copie du fichier d'images ou de l'un de la pluralité de fichiers d'images uniquement pour exécuter une lecture seule.

19. Dispositif selon la revendication 16, 17, 18, dans lequel l'arbitrage exécuté par le système logique (23) permet au dispositif de traitement d'informations ou à l'un de la pluralité de dispositifs de traitement d'informations (44,46,...,74,77) de mettre à jour une partie affectée du fichier d'images ou de l'un de la pluralité de fichiers d'images et une partie correspondante de l'information de flux de travail de production qui lui est associée.

20. Procédé pour traiter efficacement des données d'images numériques, organisées sous la forme d'un ou de plusieurs fichiers d'images, moyennant l'utilisation d'un système de production d'images par ordinateur, le système de production comprenant un système logistique (23) pour la mémorisation et l'arbitrage de l'accès au fichier d'images ou à la pluralité de fichiers d'images et pour maintenir et coordonner l'accès à une information de commande associée au fichier d'images ou à chacun de la pluralité de fichiers d'images, une pluralité de postes de travail (44,46,...,74, 77) pour accéder, afficher et améliorer des images représentées par le fichier d'images ou la pluralité de fichiers d'images, le système logistique (23) étant couplé aux postes de travail (44,46,...,74,77) au moyen d'un premier réseau (4) pour transférer l'information de commande entre le système logistique (23) et le poste de travail ou la pluralité de postes de travail (44,46, ..., 74,77), et le système logistique (23) étant en communication avec les postes de travail (44,46,...,74,77) au moyen d'un second réseau (6,8,10,12,14) pour transférer le fichier d'images ou la pluralité de fichiers d'images entre les postes de travail (44,46,...,74,77) et le système logistique,
caractérisé en ce que :
le second réseau comprend une pluralité de buses de transmission de données à grande vitesse (6,8,10,12,14), dont chacun accouple le système logistique (23) à des moyens formant contrôleur (36,38,40,42,43) pour commander le transfert de fichiers d'images entre le système logistique et un dispositif de mémoire temporaire (28,30,32,34, 35) couplé à ce système, et pour commander l'accès aux fichiers d'images transférés, mémorisés dans le dispositif de mémoire temporaire (28,30,32,34,35) parmi un sous-ensemble de la pluralité de postes de travail (par exemple 46-50) couplés directement au dispositif de mémoire temporaire (par exemple 28) par l'intermédiaire des moyens formant contrôleur (par exemple 36), ledit procédé comprenant les étapes consistant à :
envoyer une première demande pour au moins le fichier d'images ou l'un de la pluralité de fichiers d'images à partir d'un poste de travail demandeur (par exemple 44) de la pluralité de postes de travail (44,46, ...,74,77) au dispositif de mémoire temporaire (par exemple 28) couplé directement au poste de travail demandeur (par exemple 44);
si le au moins fichier d'images demandé est mémorisé dans le dispositif de mémoire temporaire (par exemple 28) couplé directement, transférer le au moins un fichier d'images demandé depuis le dispositif de mémoire temporaire (par exemple 28) couplé directement, au poste de travail demandeur (par exemple 44);
si ce n'est pas le cas, envoyer une seconde demande pour le au moins un fichier d'images demandé depuis le poste de travail demandeur (par exemple 44) au système logistique (23) par l'intermédiaire du premier réseau (4);
déterminer où, dans le système de production, est situé le au moins un fichier d'images demandé;
si le au moins un fichier d'images demandé est situé dans le dispositif de mémoire temporaire ou l'un de la pluralité de dispositifs de mémoire temporaire (par exemple 30,32,34,35) non couplé directement au poste de travail demandeur (par exemple 44) :
transférer, par l'intermédiaire du second réseau (6,8,10,12,14), le au moins un fichier d'images demandé, depuis son emplacement actuel dans l'un des dispositifs de mémoire temporaire (par exemple 30,32,34,35) non couplés directement, au dispositif de mémoire temporaire (par exemple 28) couplé directement; et
envoyer le au moins un fichier d'images demandé au poste de travail demandeur (par exemple 44).

21. Procédé selon la revendication 20, selon lequel l'étape de détermination de l'emplacement du au moins un fichier d'images demandé, dans le système de production, est réalisée par référence à l'information de commande conservée par le système logistique (23).

22. Procédé selon la revendication 20, comprenant en outre les étapes consistant à :
prévoir une base de données de suivi de fichier maintenue par un système (20) de gestion de la base de données du système logistique (23);
maintenir des entrées dans la base de données et le suivi de fichier pour le fichier de mémoire ou l'un quelconque de la pluralité de fichiers de mémoire mémorisés dans le dispositif de mémoire temporaire ou dans la pluralité de dispositifs de mémoire temporaire (28,30,32,34,35), chacune des entrées spécifiant un emplacement du fichier d'images associé à l'entrée; et
selon lequel l'étape de détermination de l'emplacement du au moins un fichier d'images demandé comprend en outre l'étape consistant à déterminer si le au moins un fichier d'images demandé est contenu dans l'un quelconque des dispositifs de mémoire temporaire non couplés (par exemple 30,32,34,35) par recherche de la base de données de suivi de fichier pour l'une des entrées associées ou au moins un fichier d'images demandé.

23. Procédé selon la revendication 22, selon lequel l'étape consistant à déterminer où le au moins un fichier d'images demandé est situé dans le système de production, comprend en outre les étapes consistant à :
si aucune des entrées de la base de données de suivi de fichier n'est associée au au moins un fichier d'image demandé, déterminer si le au moins un fichier d'images demandé est contenu dans l'un des dispositifs de mémoire temporaire non couplé directement (par exemple 30,32,34,35) par recherche de chacun des dispositifs de mémoire temporaire non couplés directement (par exemple 30,32,34,35) pour le au moins un fichier d'images demandé;
si le au moins un fichier d'images demandé est trouvé :
transférer, par l'intermédiaire du second réseau (par exemple 8,10,12,14) le au moins un fichier d'images d'images demandé depuis son emplacement actuel dans l'un des dispositifs de mémoire temporaire non couplés directement (par exemple 30,32,34,35) au dispositif de mémoire temporaire couplé directement (par exemple 28);
envoyer le au moins un fichier d'images demandé au poste de travail demandeur (par exemple 44); et
créer une entrée dans la base de données de suivi de fichier associée au au moins un fichier d'images demandé, spécifiant son emplacement dans le dispositif de mémoire temporaire couplé directement (par exemple 28).

24. Procédé selon la revendication 23, selon lequel le système logistique (23) comprend des moyens formant mémoire d'archivage (17, 19) pour mémoriser les fichiers d'images et l'information de commande, qui leur est associée, pendant de longs intervalles de temps, et selon lequel l'étape consistant à déterminer l'emplacement du au moins un fichier d'images demandé, comprend en outre les étapes consistant à :
si le au moins un fichier d'images demandé n'est pas trouvé dans le dispositif de mémoire temporaire (28,30,32,34,35), déterminer si le au moins un fichier d'images demandé est situé dans les moyens formant mémoire d'archivage (17,19); et
si la réponse est oui :
accéder au au moins un fichier d'images demandé à partir du dispositif de mémoire d'archivage (17,19);
transférer le au moins un fichier d'images demandé, par l'intermédiaire du second réseau (par exemple 6) depuis le système logistique (23) au dispositif de mémoire temporaire couplé directement (par exemple 28); et
envoyer le au moins un fichier d'images demandé au poste de travail demandeur (par exemple 44).

25. Procédé selon la revendication 24, comprenant en outre les étapes consistant à :
préparer une base de données d'archivage maintenue par un système (20) de gestion de base de données du système logistique (23);
maintenir des entrées dans la base de données et d'archivage pour l'un quelconque des fichiers d'images mémorisés dans les moyens formant mémoire d'archivage (17, 19) du système logistique (23), chacune des entrées de la base de données d'archivage spécifiant l'emplacement du fichier d'images associé à l'entrée; et
selon lequel l'étape consistant à déterminer si le au moins un fichier d'images demandé est contenu dans les moyens formant mémoire d'archivage (17,19) comprenant en outre l'étape consistant à rechercher dans la base de données d'archivage l'une des entrées associées au au moins un fichier d'images demandé.

26. Procédé selon la revendication 20, 23 ou 24, selon lequel l'étape consistant à envoyer le au moins un fichier d'images demandé au poste de traitement demandeur (par exemple 44) comprend en outre l'étape consistant à transférer une copie du au moins un fichier d'images demandé à partir du dispositif de mémoire temporaire (par exemple 28) couplé directement au poste de traitement demandeur (par exemple 44).

27. Procédé selon la revendication 22, selon lequel l'étape consistant à déterminer si le au moins un fichier d'images demandé est contenu dans l'un quelconque des dispositifs de mémoire temporaire non couplés (par exemple 30,32,34,35) comprend en outre l'étape consistant à vérifier que le au moins un fichier demandé est mémorisé à l'emplacement spécifié par l'entrée associée au au moins un fichier d'images demandé.

28. Procédé selon la revendication 27, dans lequel l'étape de vérification comprend en outre des étapes consistant à :
si le au moins un fichier d'images demandé est mémorisé à l'emplacement spécifié, transférer le au moins un fichier d'images demandé depuis l'emplacement spécifié au dispositif de mémoire temporel couplé directement (par exemple 28) par l'intermédiaire du système logistique (23);
si le au moins un fichier d'images demandé n'est pas mémorisé à l'emplacement spécifié, rechercher le au moins un fichier d'images demandé dans chacun des dispositifs de mémoire temporaire non couplés directement (par exemple 30,32,34,35).

29. Procédé selon la revendication 28, selon lequel l'étape consistant à effectuer une recherche dans chacun des dispositifs de mémoire temporaire non couplés directement (par exemple 30,32,34,35) comprend en outre les étapes consistant à :
si le au moins un fichier d'images demandé est trouvé, transférer le au moins un fichier d'images demandé au dispositif de mémoire temporaire couplé directement (par exemple 28);
si le au moins un fichier d'images demandé n'est pas trouvé, envoyer un message non trouvé au poste de travail demandeur (par exemple 44).

30. Procédé selon les revendications 20, 23, 24, 26, 28 ou 29, selon lequel le transfert du au moins un fichier d'images demandé depuis le dispositif de mémoire temporaire non couplé directement (par exemple 30,32,34,35) au dispositif de mémoire couplé directement (par exemple 28) est exécuté au moyen du système logistique (23).

31. Procédé selon les revendications 23, 24, 26, 28 ou 29, selon lequel l'étape de transfert du au moins un fichier d'images demandé depuis le dispositif de mémoire temporaire non couplé directement (par exemple 30,32,34,35) au dispositif de mémoire temporaire couplé directement (par exemple 28) comprend en outre l'étape consistant à mettre à jour la base de données de suivi de fichiers pour spécifier à quel endroit, dans le dispositif de mémoire couplé temporairement (par exemple 28), le au moins un fichier d'images demandé est mémorisé après le transfert.

32. Procédé selon l'une quelconque des revendications précédentes, selon lequel les fichiers d'images représentent une ou plusieurs cellules, les cellules comprenant une ou plusieurs trames, les trames comprenant une ou plusieurs scènes, les scènes étant organisées en tant que production conformément à un script, l'organisation et le contenu de chacune des scènes étant définis par un plan d'une scène conformément au script, le procédé comprenant les étapes consistant à :
prévoir une base de données de scènes conservée dans un système (20) de gestion de la base de données du système logistique (23); et
créer un ou plusieurs fichiers de la base de données de scènes dans la base de données de scènes pour chacune des scènes de la production, le fichier de base de données de scènes ou chacun de la pluralité de fichiers de base de données de scènes comprenant des données définissant le contenu et l'organisation pour chacune des scènes en fonction du plan pour chacune des scènes, les données définissant le contenu et l'organisation incluant des données identifiant les fichiers d'images représentatifs des images comprenant la scène ou chacune de la pluralité de scènes.

33. Procédé selon la revendication 32, comprenant en outre les étapes consistant à :
transmettre une demande d'accès à une ou plusieurs bases de données de scènes depuis le poste de travail demandeur (par exemple 44) vers le système logistique (23) par l'intermédiaire du premier réseau (4);
recevoir le fichier de base de données de scène ou au moins l'un de la pluralité de la base de données demandées ou la pluralité de bases de données de scènes demandées, dans le poste de travail demandeur (par exemple 44); et
dans lequel le au moins un fichier d'images demandé est identifié par le au moins un fichier de bases de données de scènes reçu.

34. Procédé selon la revendication 33, comprenant en outre-les étapes consistant à :
libérer le au moins un fichier d'images demandé; et
libérer la base de données de scènes ou la pluralité de bases de données de scènes, auxquelles l'accès est réalisé, lorsqu'elles ne sont plus requises.

35. Procédé selon la revendication 32, comprenant en outre l'étape consistant à accéder à l'étape d'accès d'arbitrage à la base de données de scène demandée ou à la pluralité de bases de données de scènes demandées, l'étape d'arbitrage comprenant en outre les étapes consistant à :
demander un niveau d'autorisation pour la base de données de scènes demandée ou la pluralité de bases de données de scènes demandées, sur la base d'opérations devant être exécutées sur le au moins un fichier d'images demandé identifié par le fichier ou la pluralité de fichiers de la base de données de scènes demandée ou de la pluralité de bases de données de scènes demandées; et
envoyer le niveau d'autorisation demandé ainsi que la demande pour la base de données de scènes ou la pluralité de bases de données de scènes.

36. Procédé selon la revendication 35, selon lequel l'étape d'arbitrage comprend en outre les étapes consistant à :
déterminer, dans le système logistique (23), si la base de données de scènes demandée ou chacune de la pluralité de bases de données de scènes demandées possède un état d'autorisation débloqué ou bloqué;
si l'état d'autorisation de la base de données de scènes demandée ou la pluralité de bases de données de scènes demandées n'est pas bloquée, envoyer le fichier ou la pluralité de fichiers de la base de données de scènes demandées ou de la pluralité de bases de données de scènes demandées au poste de travail demandeur (par exemple 44); et
si l'état d'autorisation de la base de données de scènes demandées ou de la pluralité de bases de données de scènes demandées est bloqué et si le niveau d'autorisation demandé est seulement lu, envoyer le fichier ou la pluralité de fichiers de la base de données de scènes demandées ou la pluralité de bases de données de scènes demandées au poste de travail demandeur (par exemple 44).

37. Procédé selon la revendication 36, selon lequel l'étape d'arbitrage comprend en outre l'étape consistant à envoyer un message non disponible au poste de travail demandeur (par exemple 44), si le niveau d'autorisation demandé et la lecture - l'écriture et l'état d'autorisation de la base de données de scènes demandée ou de la pluralité de bases de données de scènes demandées est bloqué.

38. Procédé selon la revendication 36 ou 37, selon lequel l'étape d'arbitrage comprend en outre les étapes consistant à :
déterminer si un utilisateur du poste de traitement demandeur (par exemple 44) a un état de lecture - d'écriture limitée;
si ce n'est pas le cas où si l'état d'autorisation de la base de données de scènes demandée ou de la pluralité de bases de données de scènes demandées est bloqué, envoyer un message non disponible au poste de travail demandeur (par exemple 44);
si la réponse est oui et si la demande pour la base de données de scènes ou la pluralité de bases de données de scènes comprend une demande pour des parties du fichier ou de la pluralité de fichiers de la base de données de scènes ou de la pluralité de bases de données de scènes, auquel un accès a déjà été réalisé par d'autres utilisateurs ayant un état de lecture - d'écriture limitée, envoyer un message non disponible au poste de travail demandeur (par exemple 44); et
si la réponse est oui et si la demande pour la base de données de scènes ou la pluralité de bases de données de scènes comprend une demande pour des parties du fichier ou de la pluralité de fichiers de la base de données de scènes demandée ou de la pluralité de base de données de scènes demandées, auxquelles un accès n'a pas déjà été réalisé par d'autres utilisateurs ayant un état de lecture - d'écriture limitée, envoyer les parties demandées de la base de données de scènes ou de la pluralité de bases de données de scènes au poste de travail demandeur (par exemple 44).

39. Procédé selon la revendication 32 ou 38, comprenant en outre l'étape consistant à prévoir un base de données de gestion de production conservée par un système (20) de gestion de base de données du système logistique (23), la base de données de gestion de production comprenant une pluralité d'entrées correspondant chacune au moins à la scène ou au moins à l'une de la pluralité de scènes de la production, chacune de la pluralité d'entrées contenant des données désignant des états de production de la scène ou de la pluralité de scènes, auxquelles l'entrée correspondant.

40. Procédé selon la revendication 39, selon lequel l'étape d'autorisation pour la base de données de scènes ou la pluralité de bases de données de scènes est conservée dans la base de données de gestion de production.

41. Procédé selon la revendication 38, 39 ou 40, comprenant en outre l'étape consistant à produire un rapport de gestion de production pour au moins la scène ou pour au moins l'une de la pluralité de scènes en utilisant les données mémorisées dans la base de données de gestion de production.

42. Procédé selon la revendication 37, selon lequel l'état de libération de la base de données de scènes ou de la pluralité de bases de données de scènes, auxquelles l'accès est réalisé, comprend en outre les étapes consistant à :
mémoriser des versions améliorées des fichiers d'images, auxquels l'accès est exécuté, et des fichiers reçus de la base de données de scènes, à laquelle l'accès est réalisé, devant être libérés à la place de versions, qui existaient au préalable, des fichiers d'images, auxquels l'accès est réalisé des fichiers reçus de la base de données de scènes, lorsque l'état d'autorisation de la base de données de scènes, à laquelle l'accès est réalisé, devant être libérée, est la lecture - l'écriture ou la lecture - l'écriture limitée; et
supprimer des versions améliorées des fichiers d'images, auxquels l'accès est réalisé, et des fichiers de la base de données de scènes, auxquels l'accès est réalisé, devant être libérée lorsque l'état d'autorisation de la base de données de scènes, auquel l'accès est réalisé, devant être libérée, est la lecture seule.

43. Procédé selon la revendication 31, selon lequel l'étape consistant à accéder à la base de données de scènes ou à la pluralité de bases de données de scènes comprend en outre l'étape consistant à sélectionner les bases de données de scènes, auxquelles l'accès doit être réalisé, en fonction d'une liste de travail.

44. Procédé selon la revendication 31, selon lequel l'étape consistant à accéder à la base de données de scènes ou à la pluralité de bases de données de scènes comprend en outre l'étape consistant à sélectionner les bases de données de scènes, auxquelles l'accès doit être réalisé, en utilisant des données mémorisées dans une base de données de sélection de travail, conservée par un système (20) de gestion de la base de données du système logistique (23).

45. Procédé selon la revendication 31, selon lequel l'étape consistant à accéder à la base de données de scènes ou à la pluralité des bases de données de scènes comprend en outre l'étape consistant à sélectionner la base de données de scènes, auquel l'accès doit être réalisé, d'une manière non basée sur le système.

46. Procédé selon la revendication 31, selon lequel le fichier ou la pluralité de fichiers de la base de données de scènes ou de la pluralité de bases de données de scènes comprend en outre des feuilles d'exposition.

47. Procédé selon l'une quelconque des revendications précédentes, comprenant en outre les étapes consistant à :
créer le fichier d'images ou la pluralité de fichiers d'images au moyen d'une illustration par balayage numérique représentant l'image ou la pluralité d'images représentées par les données d'images numériques; et
mémoriser le fichier d'images ou la pluralité de fichiers d'images dans les dispositifs de mémoire temporaire (28,30,32,34,35).
